# EUROPEAN PATENT APPLICATION

(11) **EP 4 694 538 A1**
(43) Date of publication of application: **11.02.2026**
(21) Application number: 24785193.4
(22) Date of filing: 03.04.2024
(51) Int. Cl.: H04W 74/0833, H04W 74/00, H04L 27/26, H04L 1/08, H04L 5/00

(54) **METHOD AND DEVICE FOR TRANSMISSION/RECEPTION OF PHYSICAL RANDOM ACCESS CHANNEL IN WIRELESS COMMUNICATION SYSTEM**

(30) Priority: 06.04.2023 KR 20230045699
(71) Applicant: LG Electronics Inc., Yeongdeungpo-gu Seoul 07336 (KR)
(72) Inventor: SHIN, Seokmin, Seoul 06772 (KR); KO, Hyunsoo, Seoul 06772 (KR)
(74) Representative: Plasseraud IP
(86) International application number: PCT/KR2024/004290
(87) International publication number: WO 2024/210488

(57) **Abstract**

A method according to an embodiment of the present disclosure includes transmitting a Physical Random Access CHannel (PRACH), and receiving a Random Access Response (RAR). The PRACH is transmitted based on at least one PRACH occasion. The at least one PRACH is determined based on a plurality of PRACH occasions. The at least one PRACH is based on a valid PRACH occasion. Among the plurality of PRACH occasions, a second PRACH occasion related to a second configuration that overlaps with a first PRACH occasion related to a first configuration is determined to be invalid.

## Description

### [TECHNICAL FIELD]

The present disclosure relates to a method and device for transmitting and receiving a physical random access channel in a wireless communication system.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

PRACH repetition transmission has been introduced to enhance Rel-18 coverage. In this instance, ROs based on different configurations may be configured/allocated.

### [DISCLOSURE]

### [TECHNICAL PROBLEM]

Two ROs for PRACH repetition transmission may be allocated to overlap entirely or partially. In this case, the following problems may arise. It is unclear whether all or only some of the overlapping ROs are used. Further, if only some ROs are used, the RO used by a UE may different from the RO that a base station expects the UE to use.

The present disclosure provides a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) according to an embodiment of the present disclosure comprises transmitting a Physical Random Access CHannel (PRACH), and receiving a Random Access Response (RAR).

The PRACH is transmitted based on at least one PRACH occasion. The at least one PRACH is determined based on a plurality of PRACH occasions. The at least one PRACH is based on a valid PRACH occasion.

Among the plurality of PRACH occasions, a second PRACH occasion related to a second configuration that overlaps with a first PRACH occasion related to a first configuration is determined to be invalid.

The plurality of PRACH occasions may include PRACH occasions based on multiple configurations.

The multiple configurations may be based on i) multiple RACH configurations or ii) multiple preamble configurations.

The second configuration may be a configuration determined based on at least one of i) a repetition number, ii) a priority, and/or iii) a serving cell among configurations related to overlapping PRACH occasions.

Based on the configurations being related to a same repetition number, the second configuration may be determined based on the priority.

Based on the configurations being related to a same priority, the second configuration may be determined based on the repetition number.

The repetition number related to the second configuration may be greater than a repetition number related to the first configuration.

The priority related to the second configuration may be lower than a priority related to the first configuration.

The second configuration may be related to a primary secondary cell (PSCell), and the first configuration is related to a primary cell (PCell).

The at least one PRACH occasion may include a frequency division multiplexed (FDMed) PRACH occasion in the same time resource as the second PRACH occasion.

The first PRACH occasion and the second PRACH occasion may be determined as invalid PRACH occasions.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or mre processors to perform all steps of any one of the methods.

One or more non-transitory computer readable mediums according to another embodiment of the present disclosure stores instructions.

The instructions executable by one or more processors are configured to allow the one or more processors to perform all steps of any one of the methods.

A method performed by a base station according to another embodiment of the present disclosure comprises receiving a Physical Random Access CHannel (PRACH), and transmitting a Random Access Response (RAR).

The PRACH is received based on at least one PRACH occasion. The at least one PRACH is determined based on a plurality of PRACH occasions. The at least one PRACH is based on a valid PRACH occasion.

Among the plurality of PRACH occasions, a second PRACH occasion related to a second configuration that overlaps with a first PRACH occasion related to a first configuration is determined to be invalid.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

### [ADVANTAGEOUS EFFECTS]

According to embodiments of the present disclosure, ambiguity about which ROs among overlapping ROs are used can be resolved. Furthermore, they can prevent degradation of PRACH transmission and reception performance when some or all of ROs independently/individually allocated based on various configurations (e.g., repetition number, feature combination) overlap.

An effect which can be obtained in the present disclosure are not limited to the aforementioned effect and other unmentioned advantages will be clearly understood by those skilled in the art from the following description.

### [DESCRIPTION OF THE DRAWINGS]

FIG. 1 illustrates physical channels and general signal transmission used in a 3GPP system.
FIG. 2 illustrates RACH occasions for each preamble format.
FIG. 3 illustrates a random access procedure.
FIG. 4 illustrates an RACH partitioning related RRC parameter.
FIG. 5 is a flowchart for describing a method performed by a user equipment (UE) according to an embodiment of the present disclosure.
FIG. 6 is a flowchart for describing a method performed by a base station (BS) according to another embodiment of the present disclosure.
FIG. 7 illustrates configurations of a first device and a second device according to an embodiment of the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### Physical Channel and General Signal Transmission

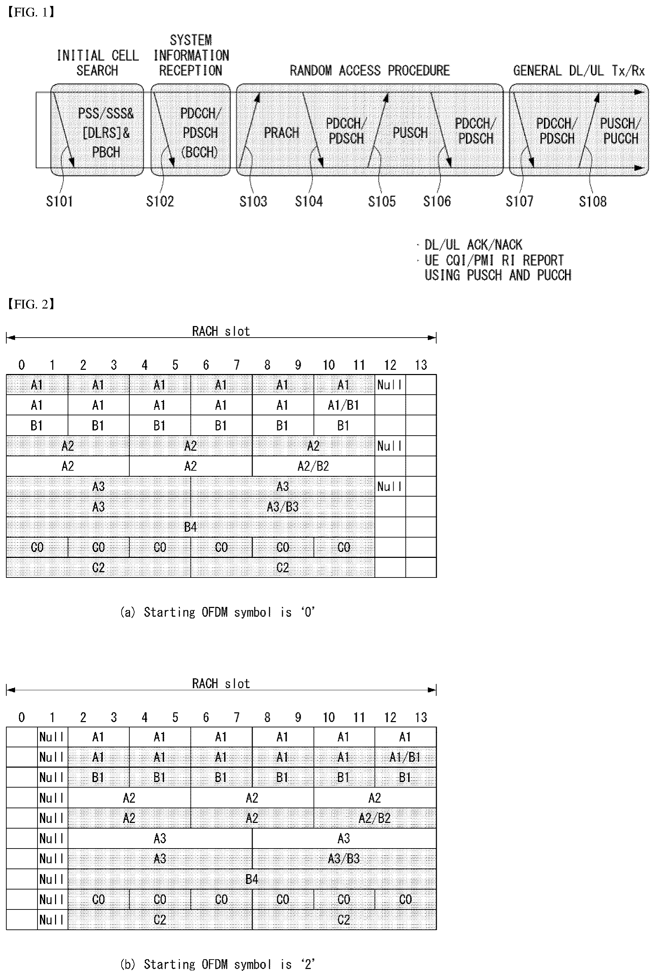

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

When there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the above procedure may then perform PDCCH/PDSCH reception (S107) and Physical Uplink Shared Channel (PUSCH)/Physical Uplink Control Channel (PUCCH) transmission (S108) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

An RACH slot is described below.

An RACH slot includes one or multiple RACH Occasion(s).

Slot duration is 1 ms for {1.25 kHz, 5 kHz} subcarrier spacing, and has scalable duration (i.e., 1 ms, 0.5 ms, 0.25 ms, 0.125 ms) for {15 kHz, 30 kHz, 60 kHz, 120 kHz} subcarrier spacing.

A start OFDM symbol index in an RACH slot has {0,2,x} values for short preamble formats.

FIG. 2 illustrates RACH occasions for each preamble format.

Referring to FIG. 2, an RACH slot may include one or more RACH occasions (ROs) for each preamble format (e.g., A1, A2, ..., C2). (a) of FIG. 2 illustrates a case in which a starting OFDM symbol is '0', and (b) of FIG. 2 illustrates a case in which a starting OFDM symbol is '2'.

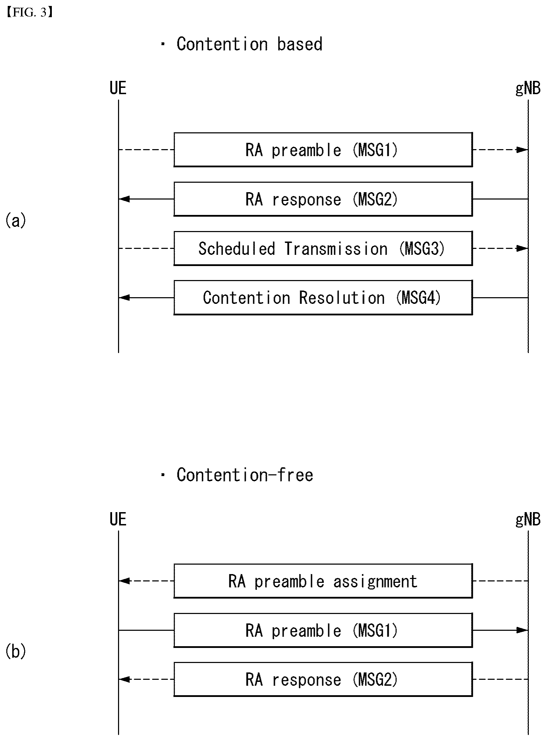

FIG. 3 illustrates a random access procedure.

(a) of FIG. 3 illustrates a contention based RACH procedure, and (b) of FIG. 3 illustrates a contention free RACH procedure.

MSG1 transmission is described below.

Subcarrier spacing for MSG1 is configured in an RACH configuration, and is provided in a handover command with respect to a contention-free RA procedure for handover.

Preamble indices for contention-based random access (CBRA) and contention-free random access (CFRA) are consecutively mapped to one SSB in one RACH transmission occasion.
- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.

The random access procedure may be a Type-1 random access procedure (4-step RA) or a Type-2 random access procedure (2-step RA).

The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.

The Type-2 random access procedure may include transmission of random access preamble and PUSCH (MsgA) and RAR reception (MsgB).

The following Table 1 shows configurations/operations related to the random access preamble.

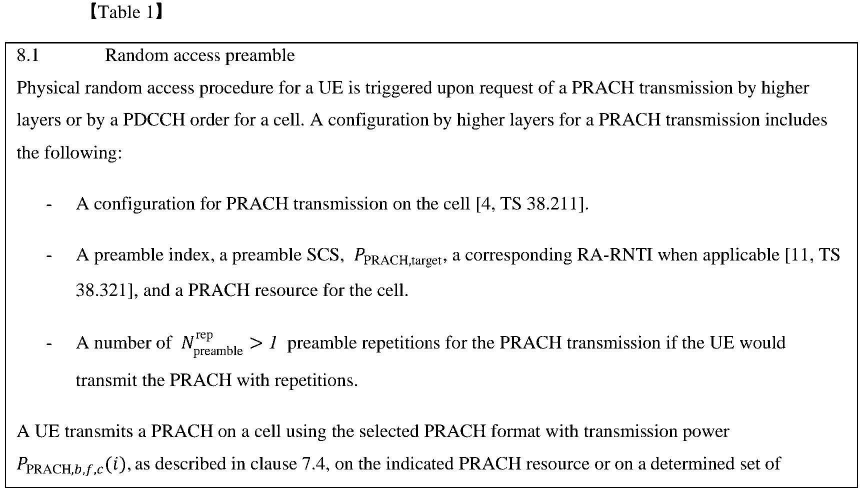

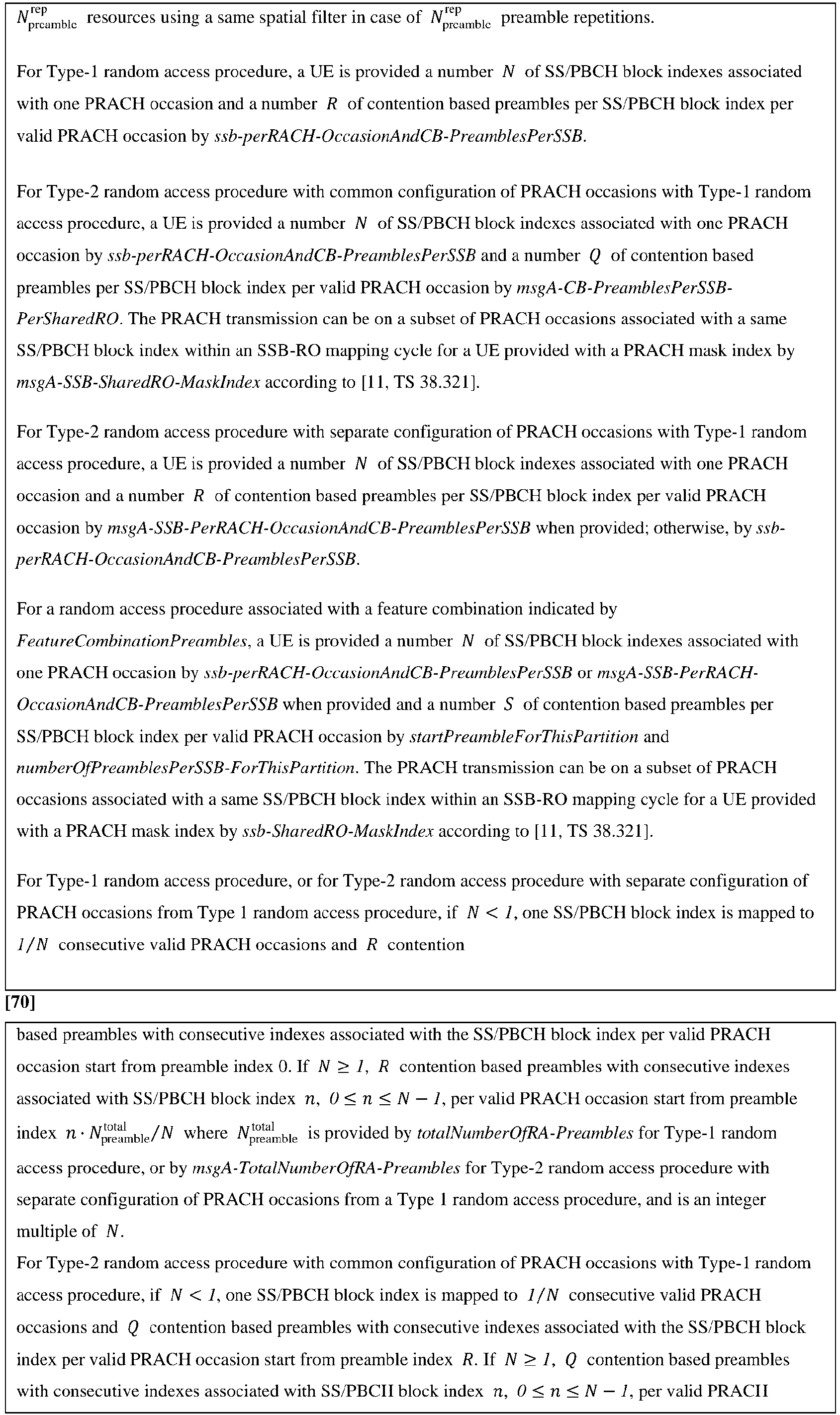

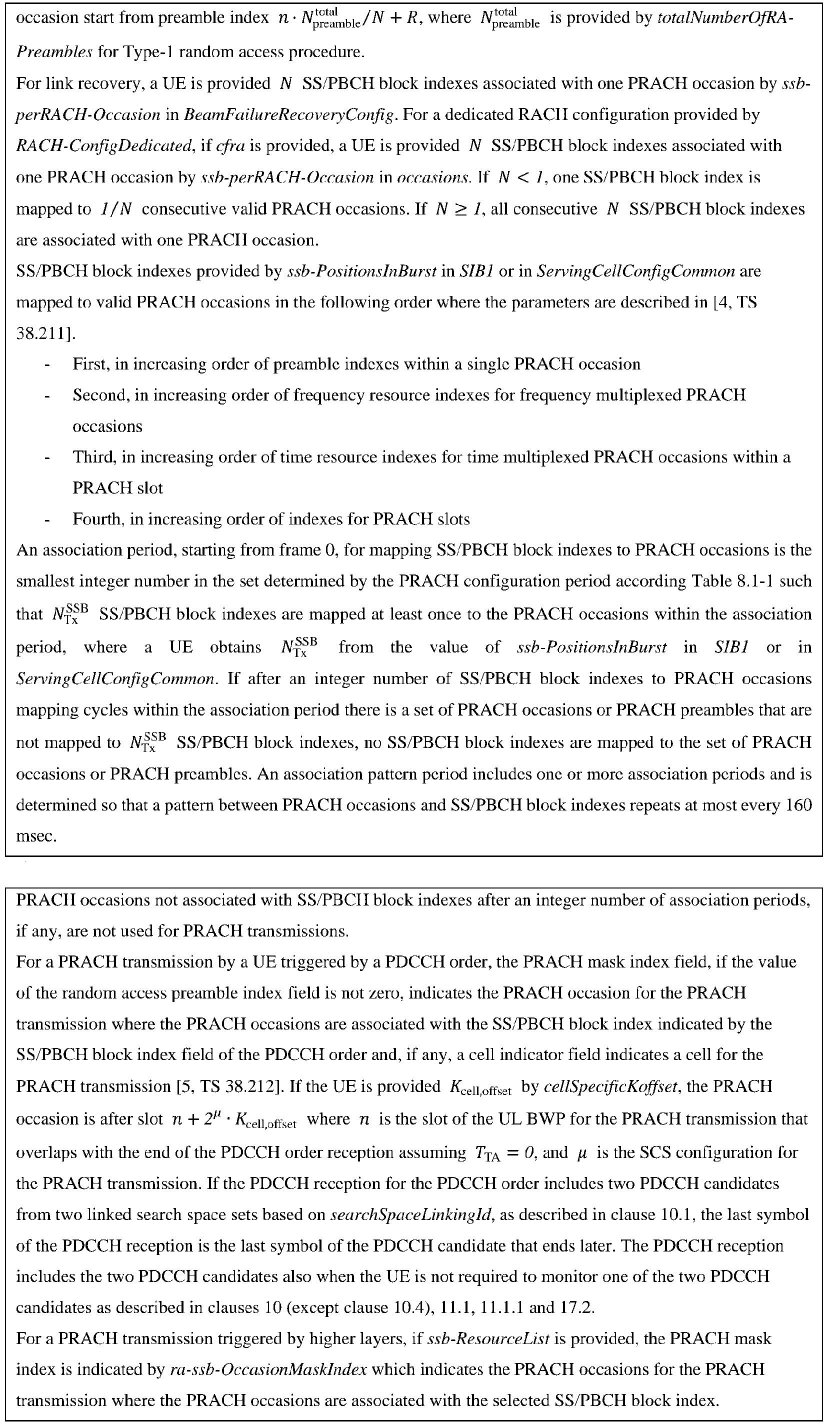

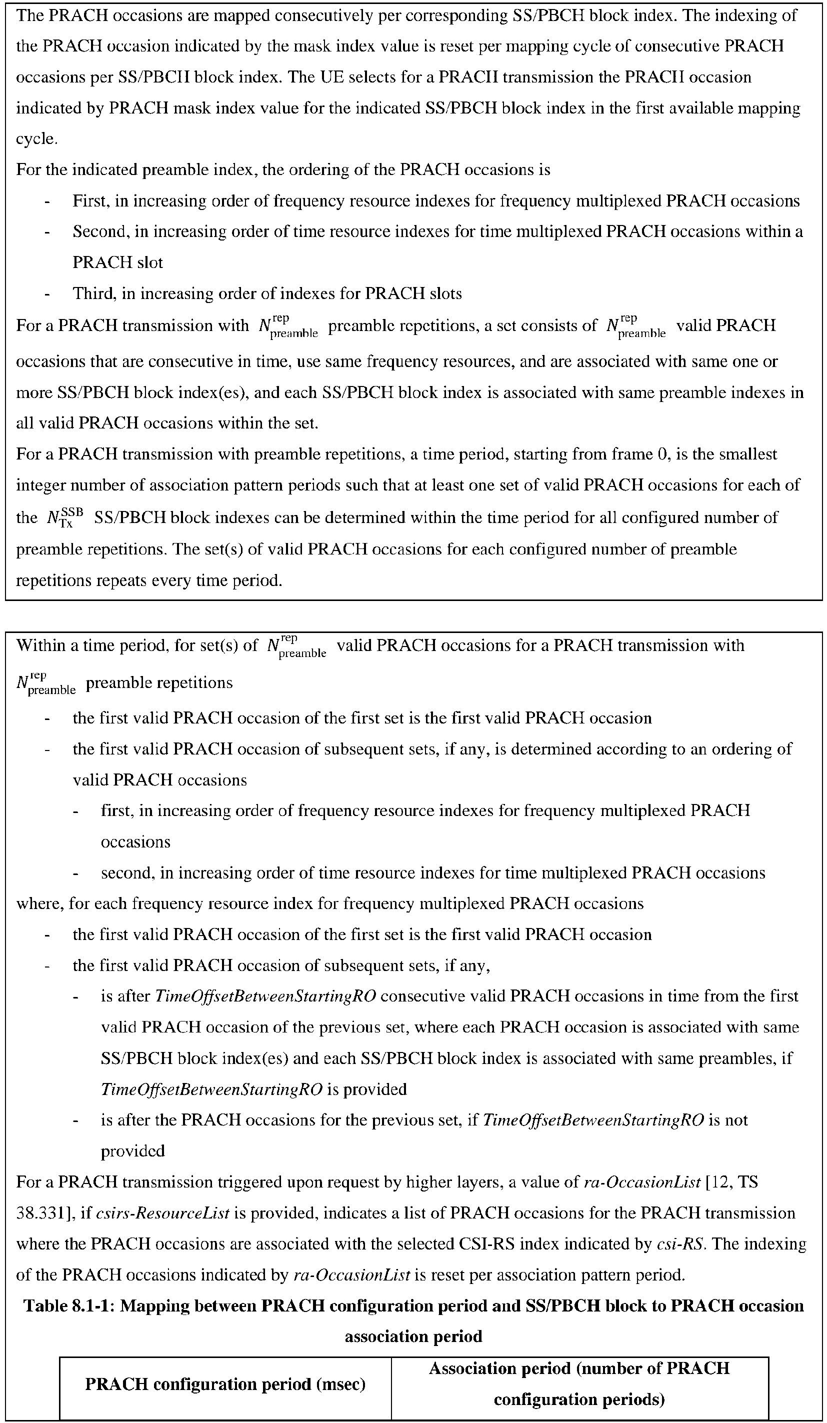

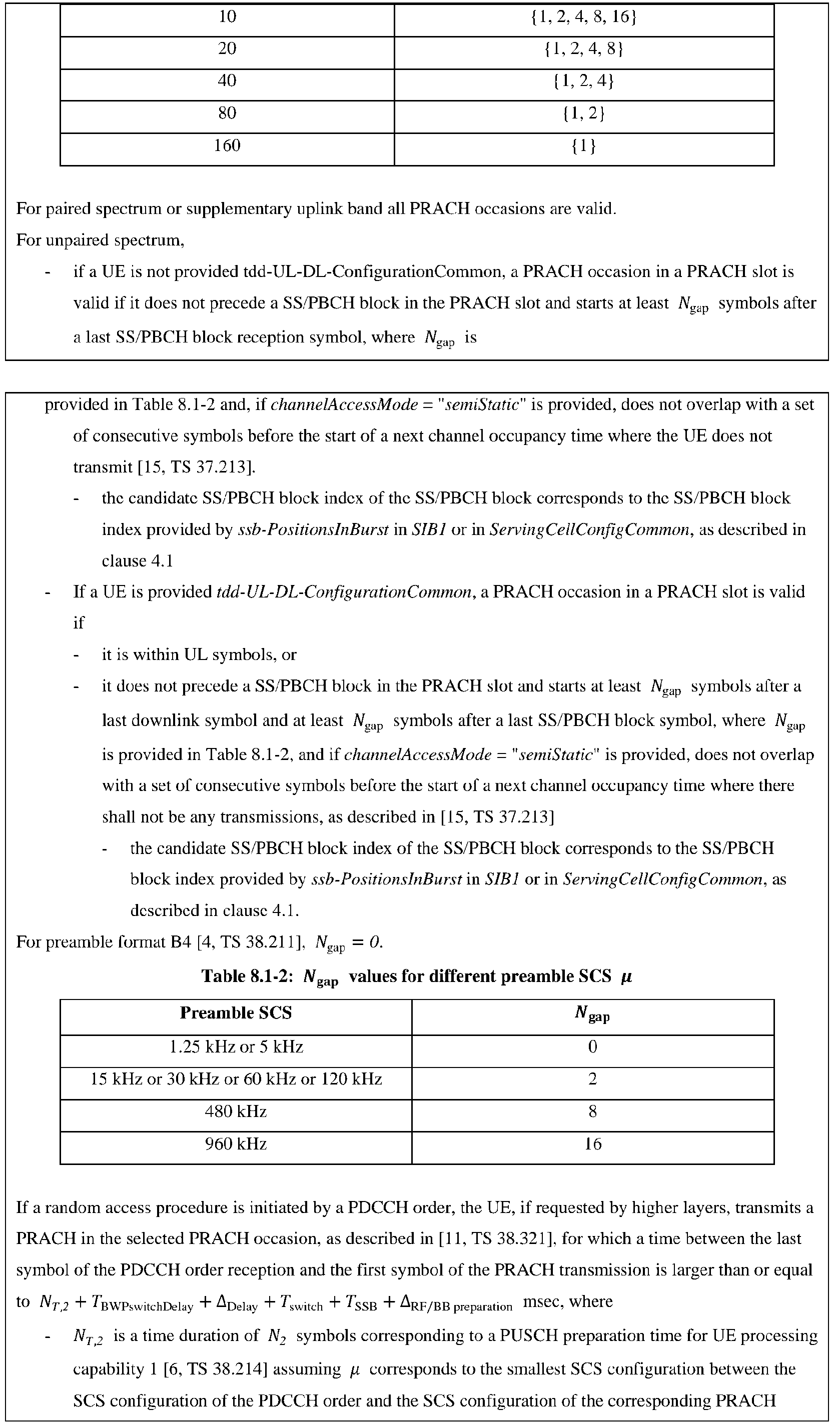

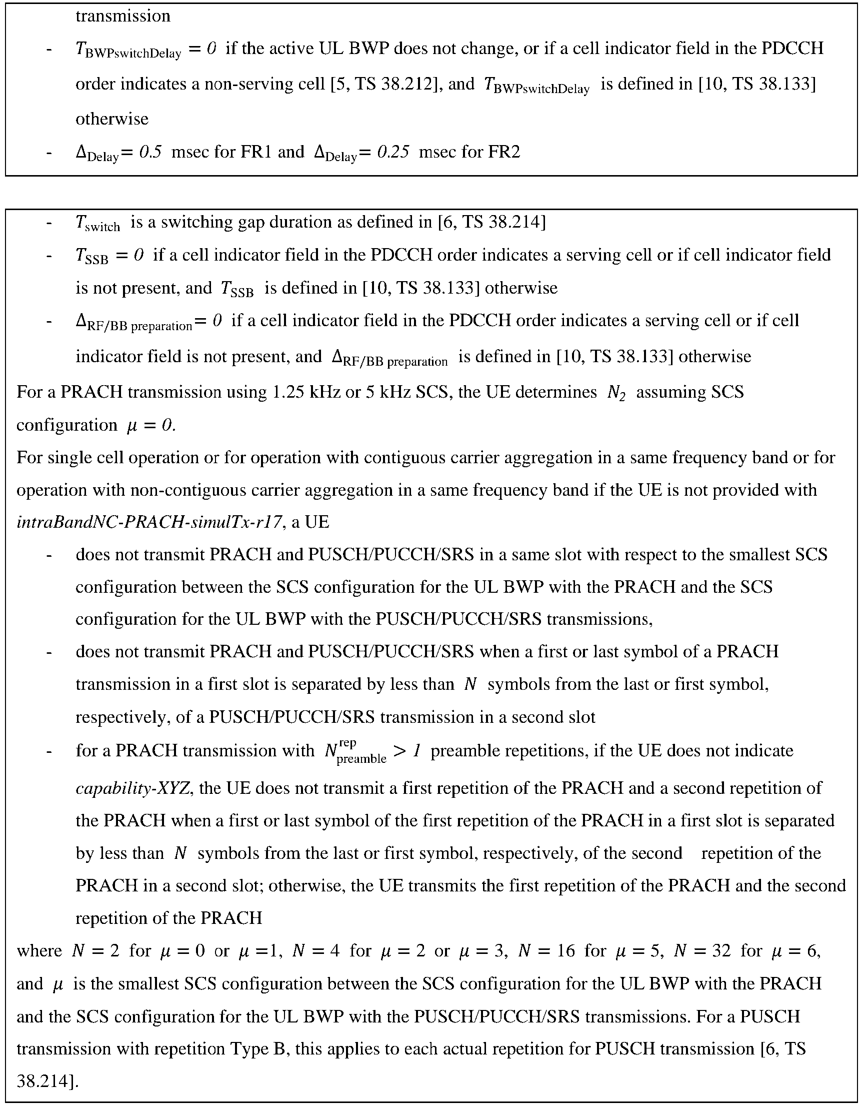

The configurations/definitions/operations according to Table 1 above may be referred to in order to clarify definitions/operations of embodiments to be described below. As an example, in an embodiment to be described below, ROs may refer to the valid PRACH occasions mentioned in Table 1. As an example, in an embodiment to be described below, multiple ROs having a same beam index may mean 1/N (where, N < 1) consecutive valid PRACH occasions to which one SS/PBCH index is mapped.

Tables 2 to 4 below illustrate PRACH configuration tables to which the embodiments to be described below may be applied.

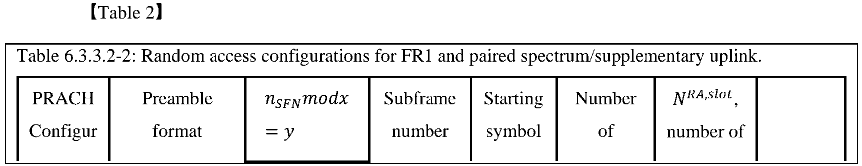

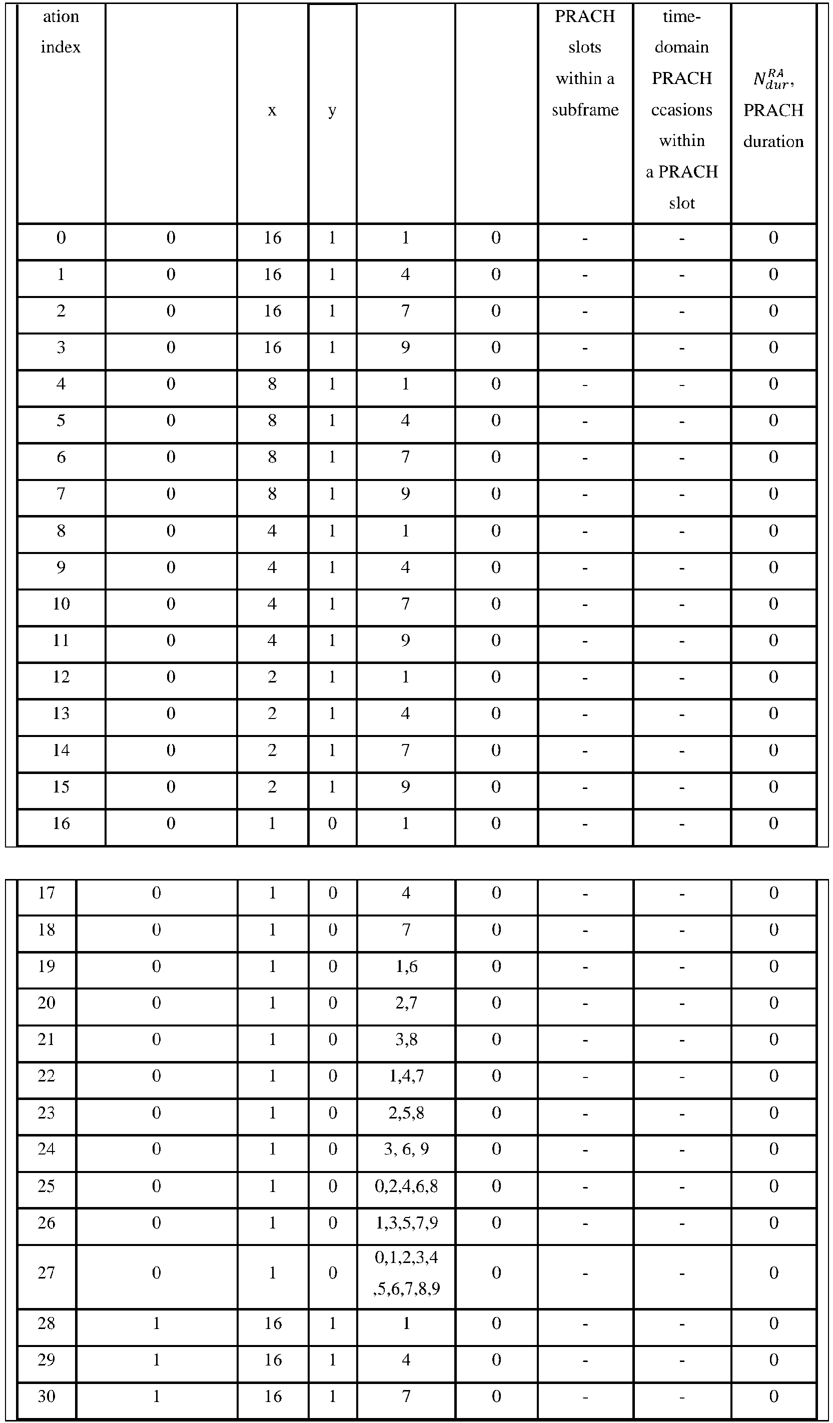

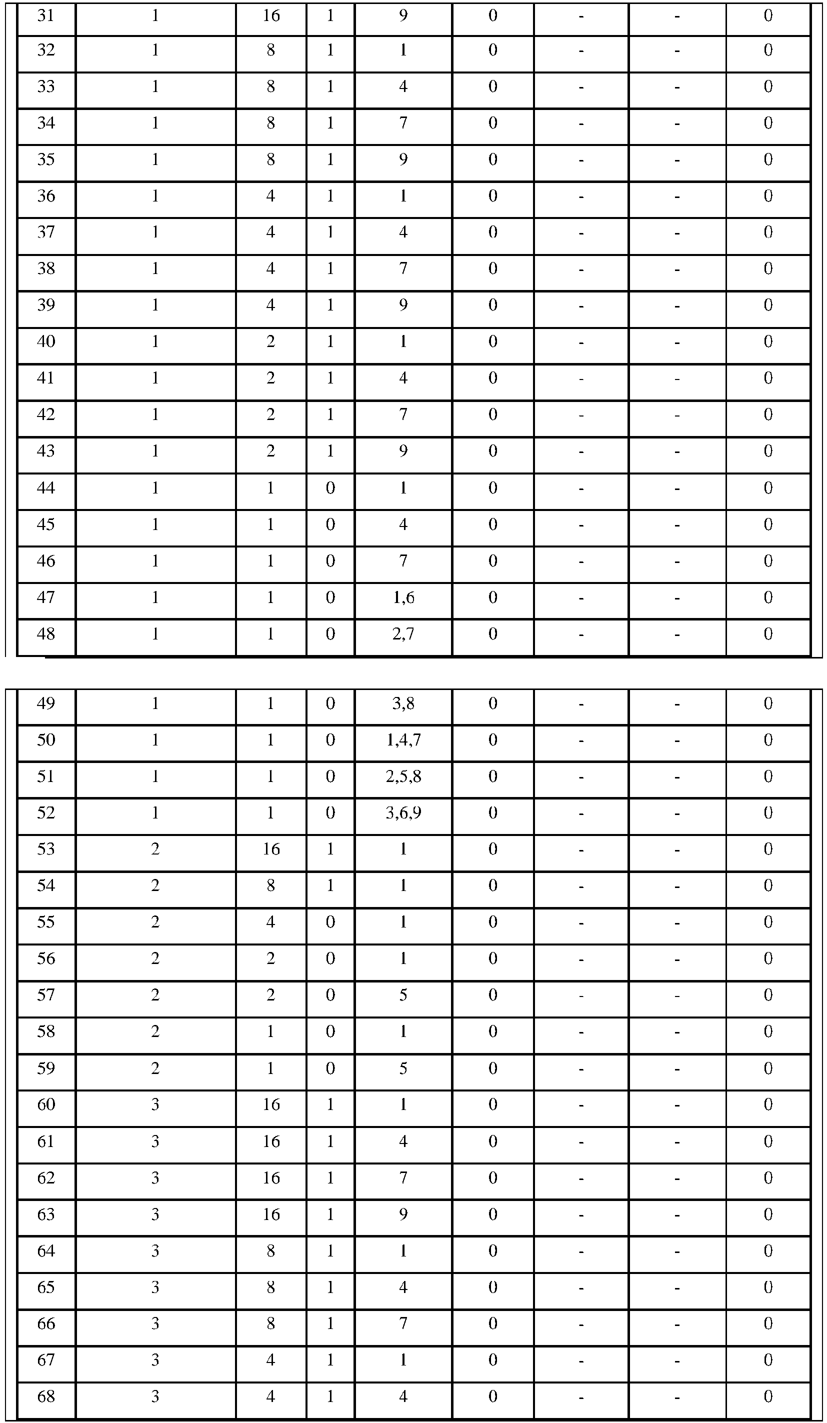

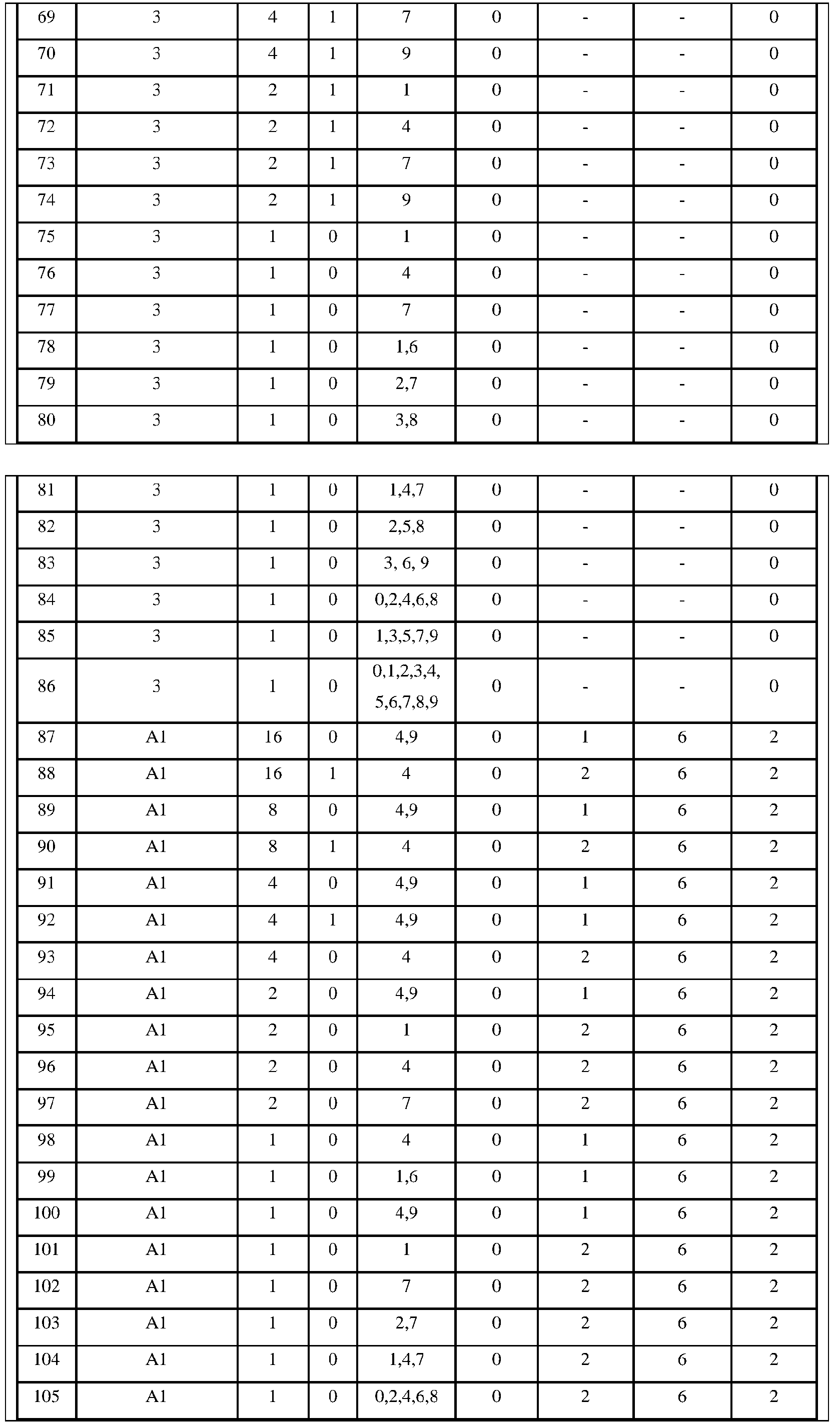

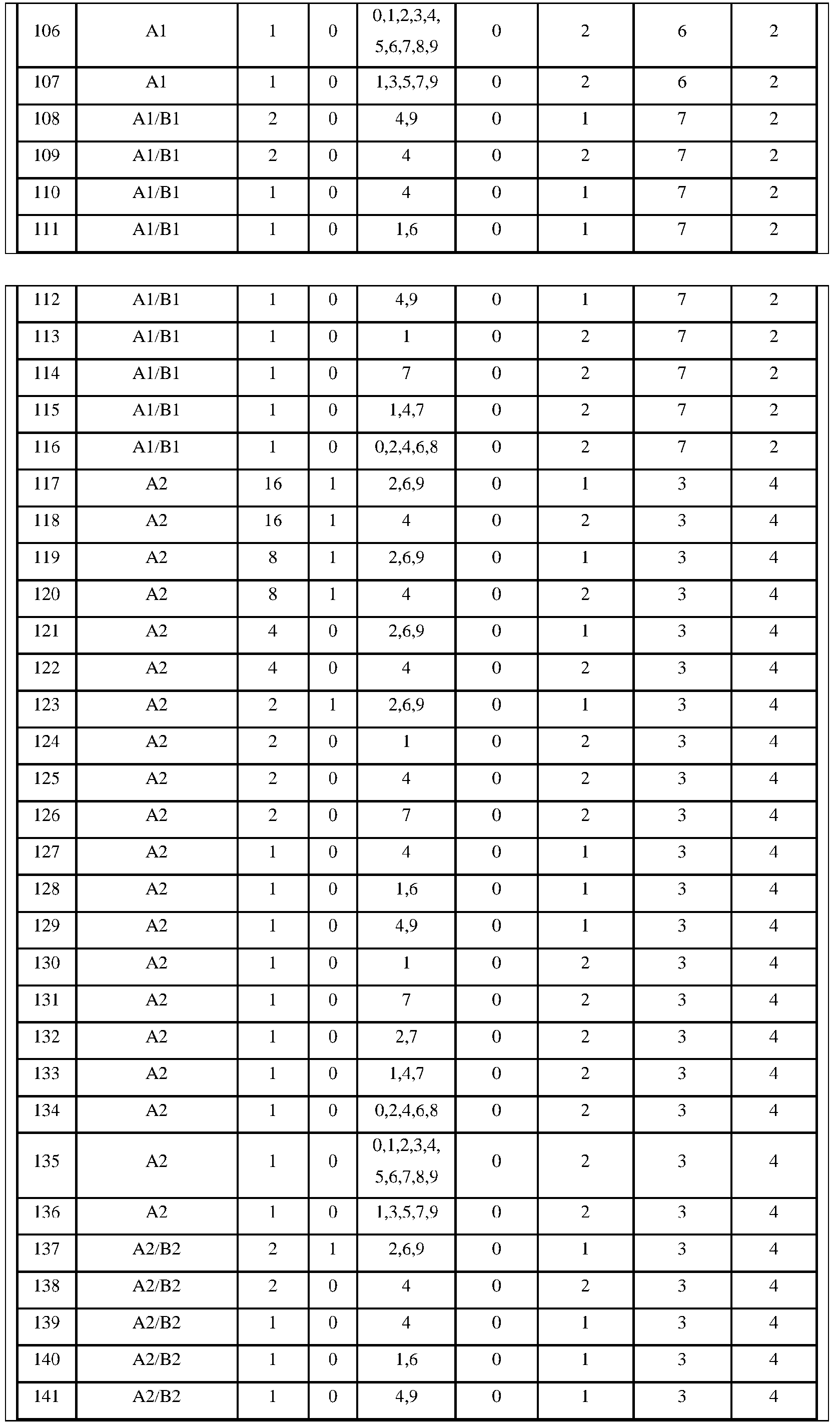

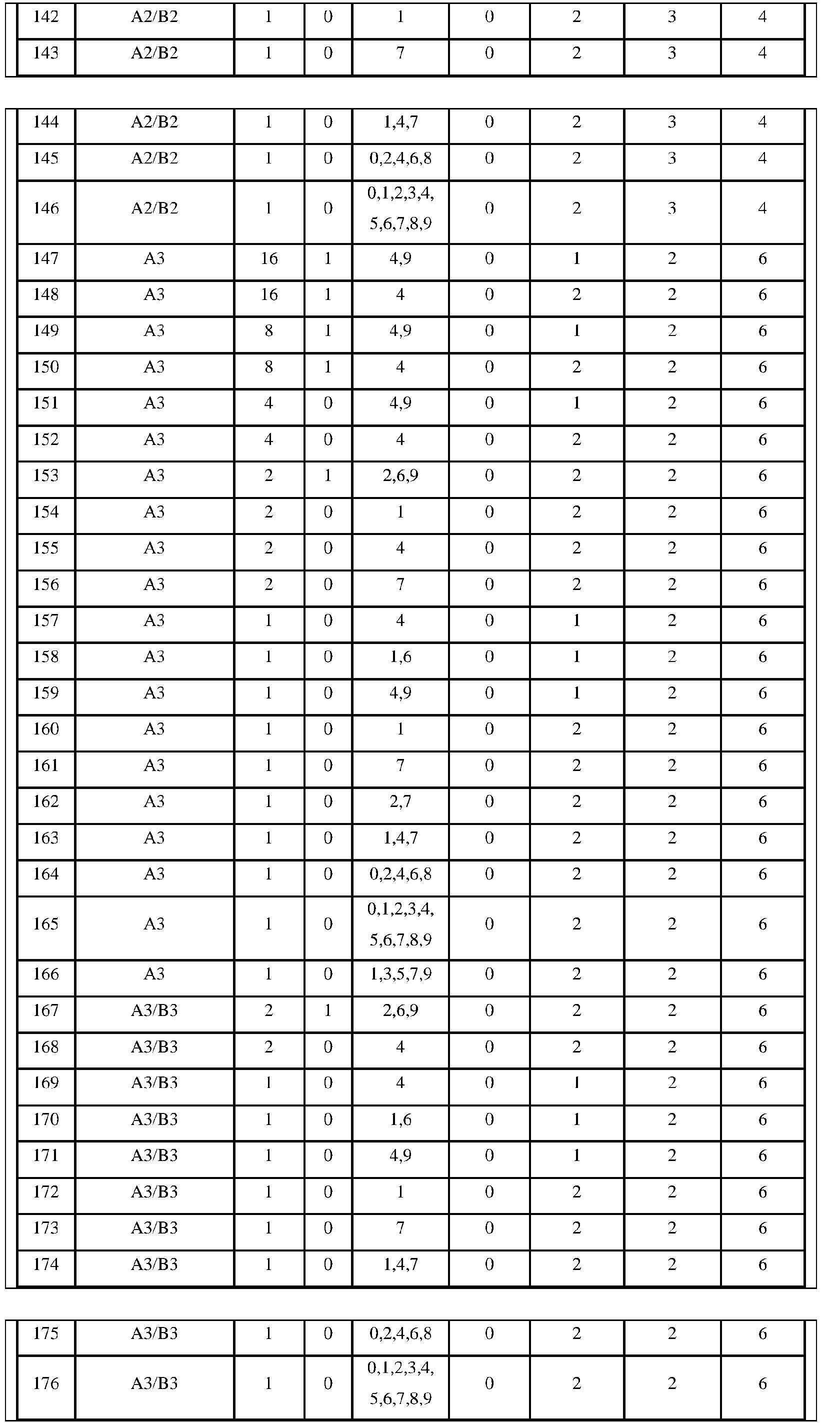

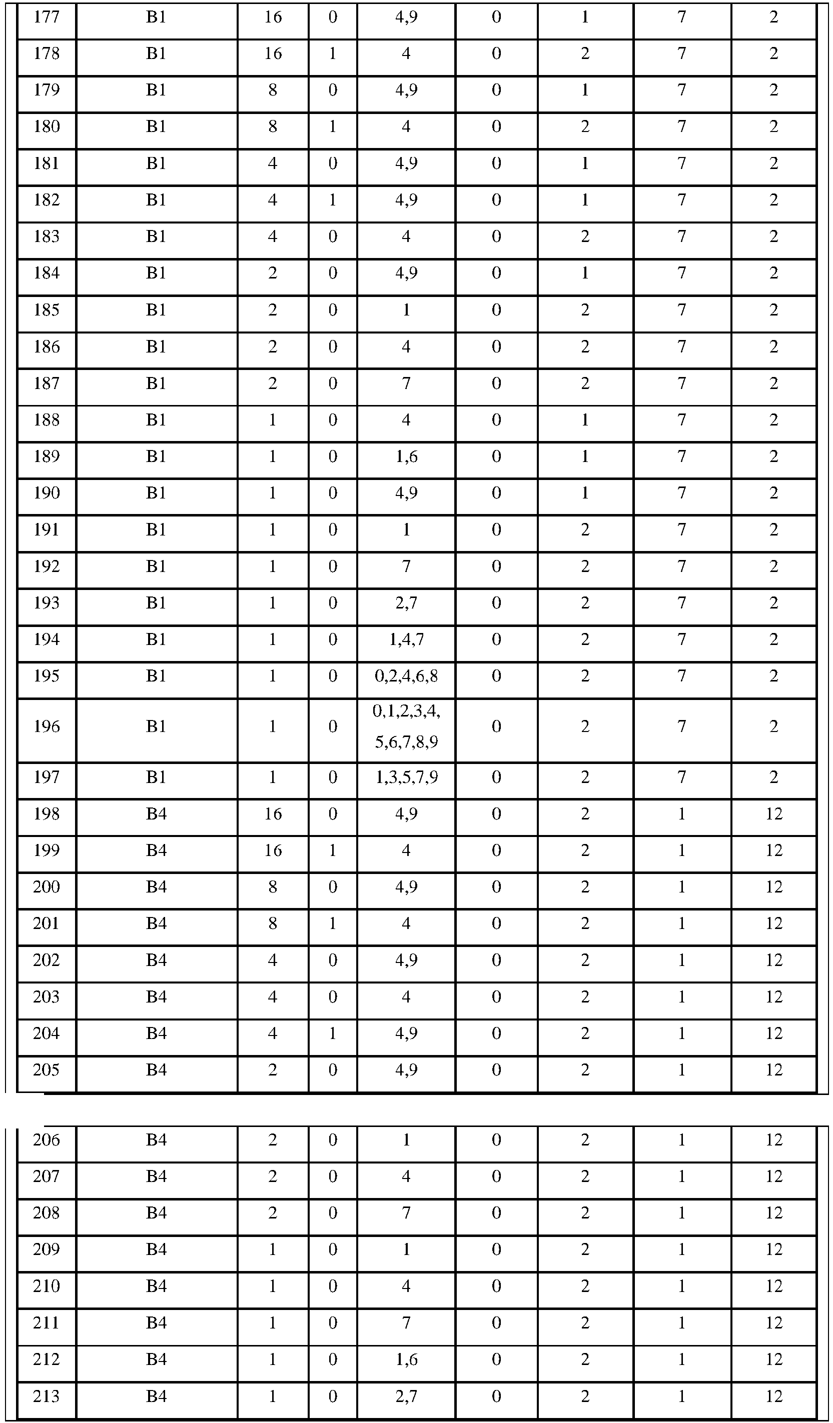

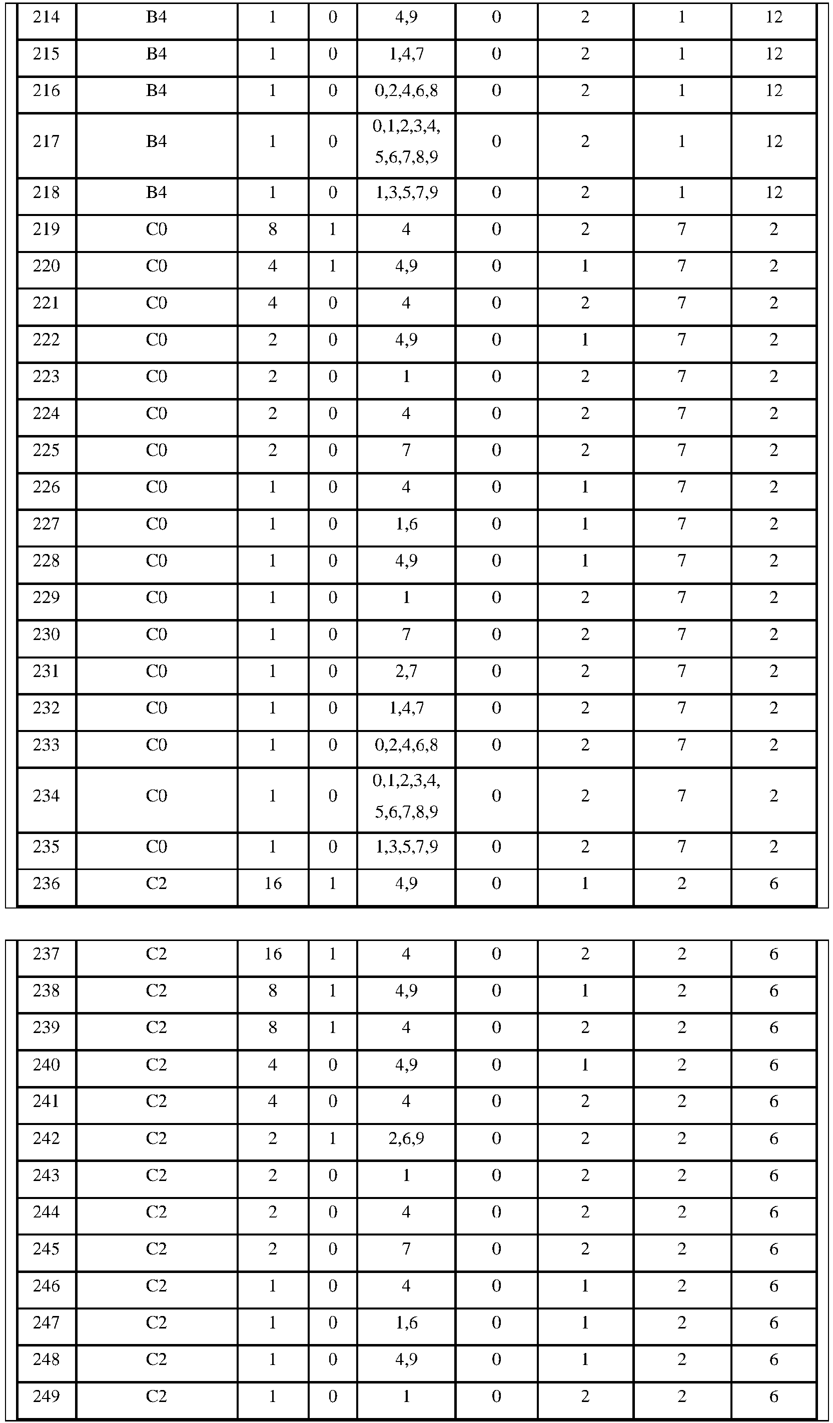

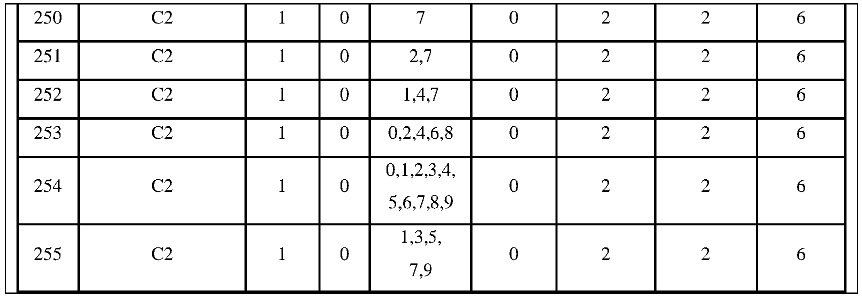

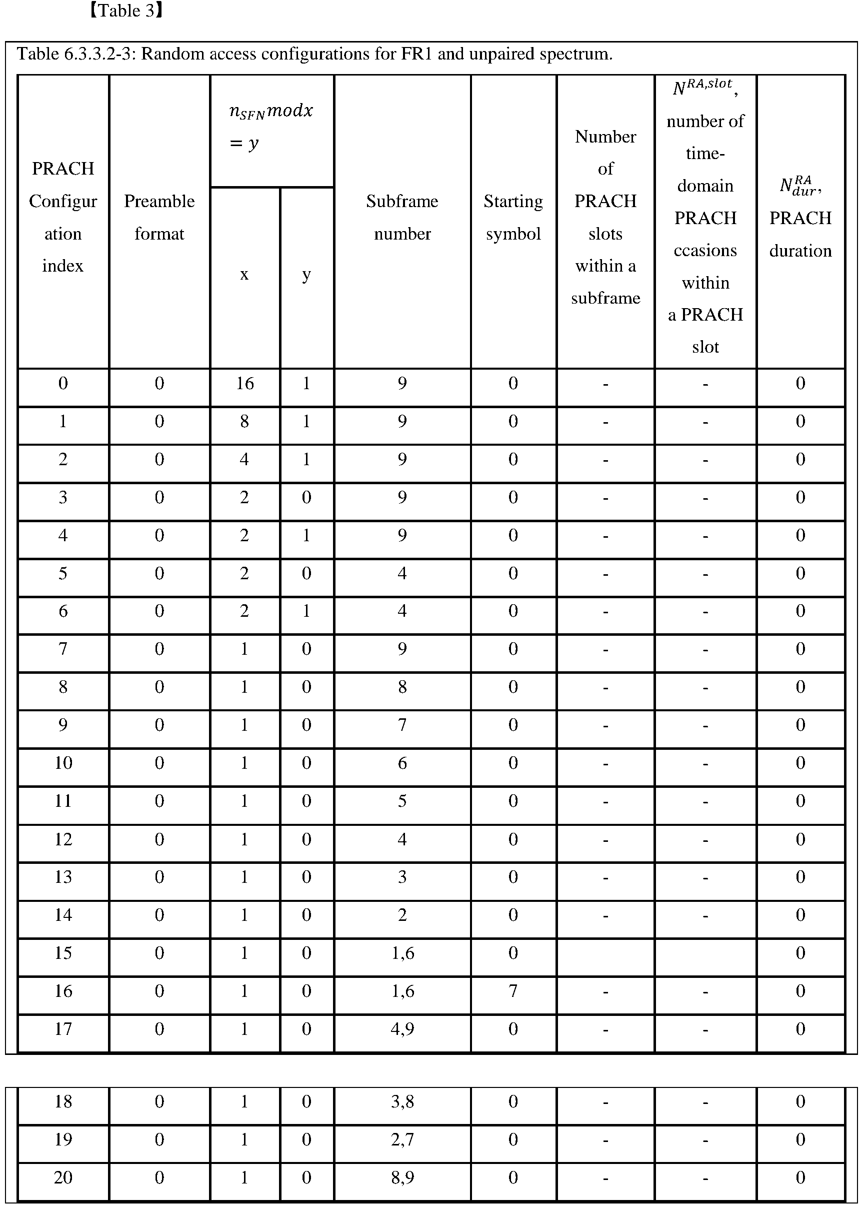

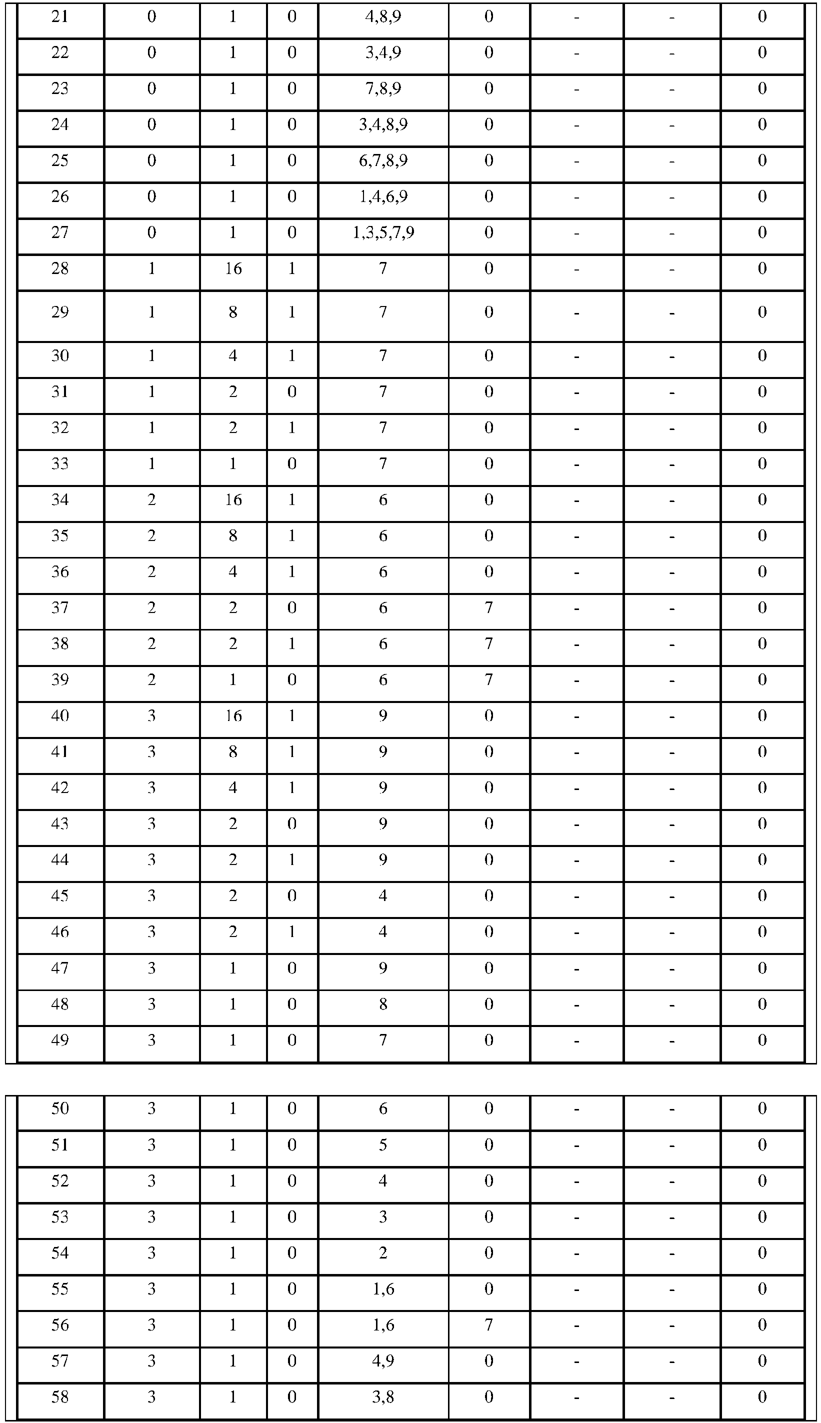

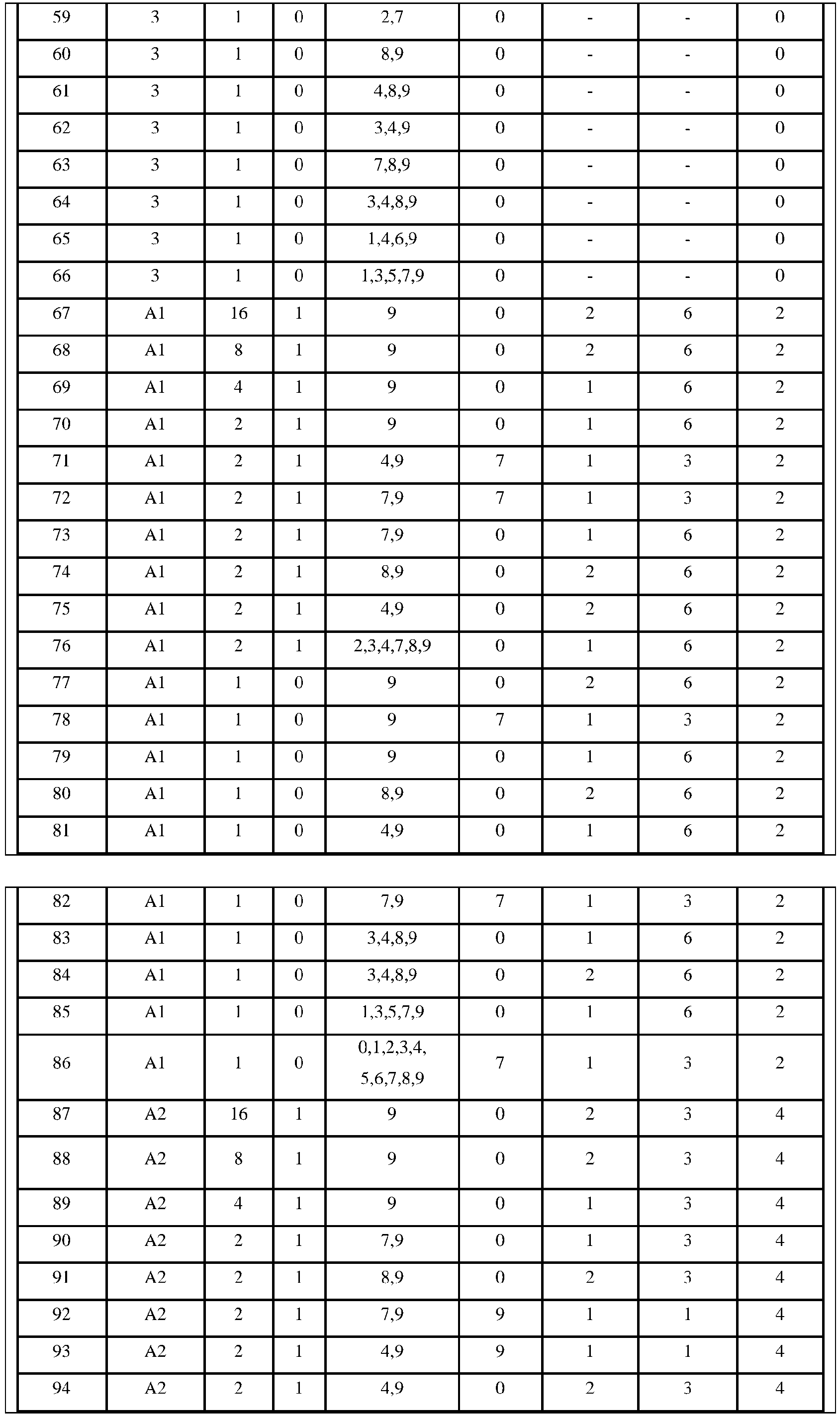

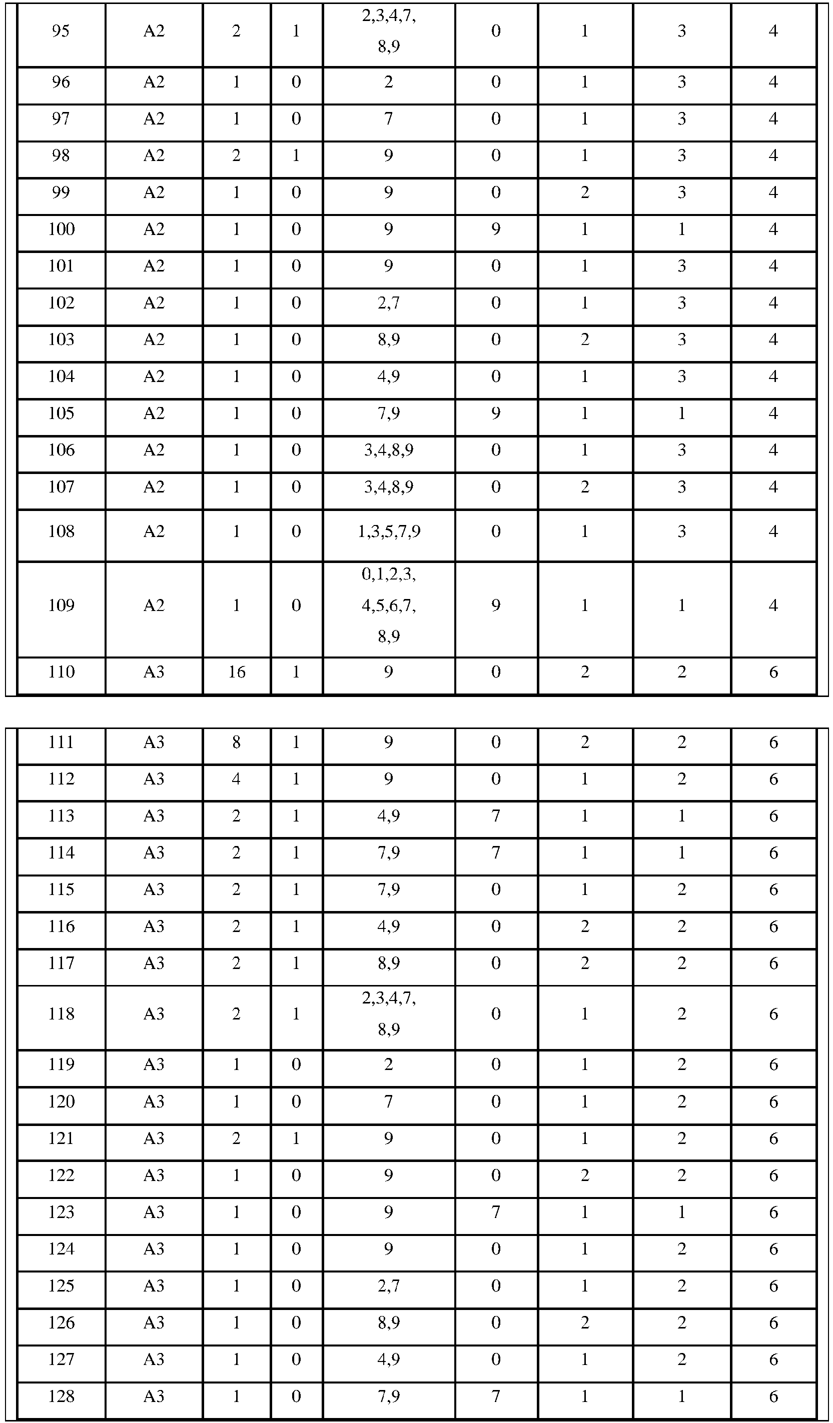

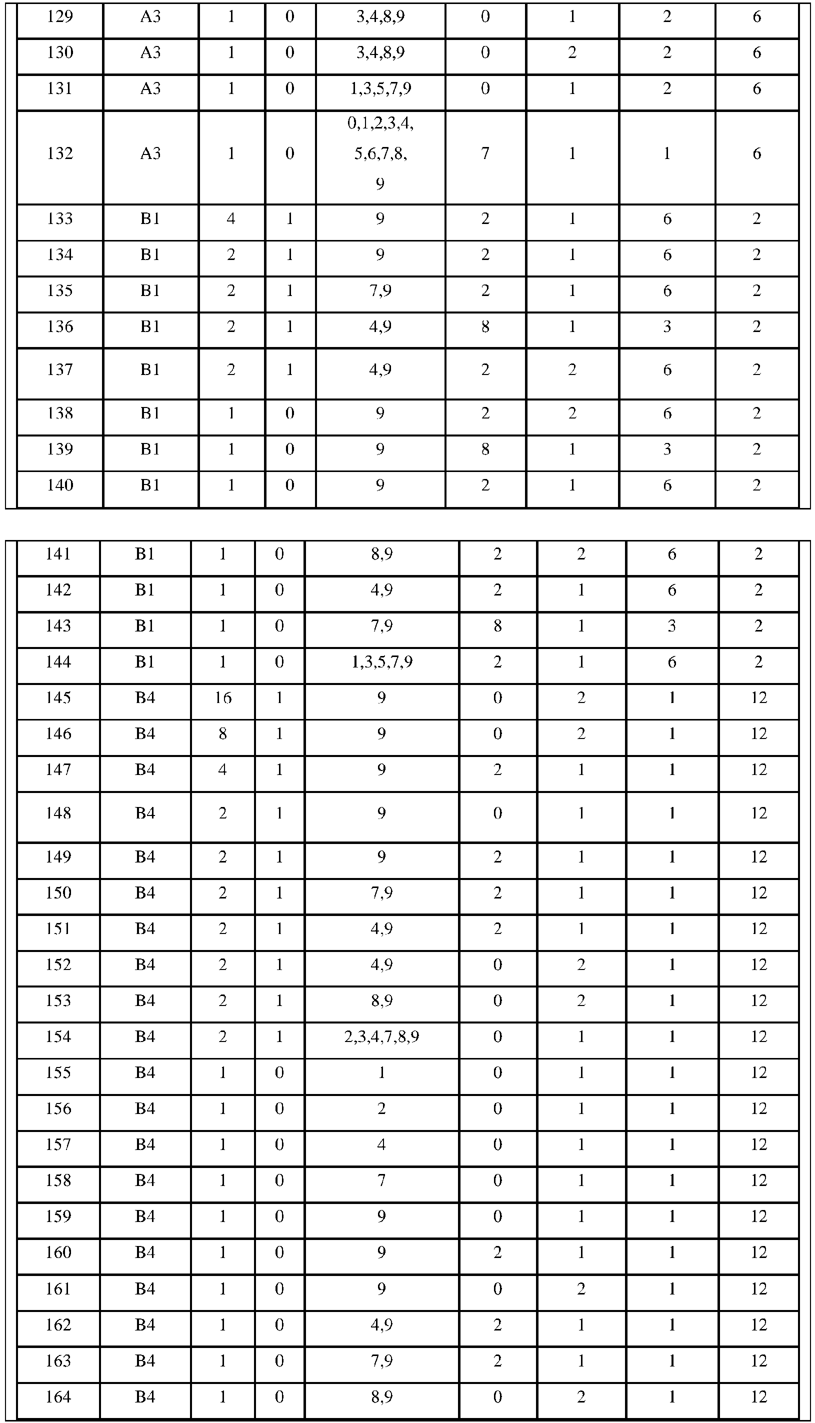

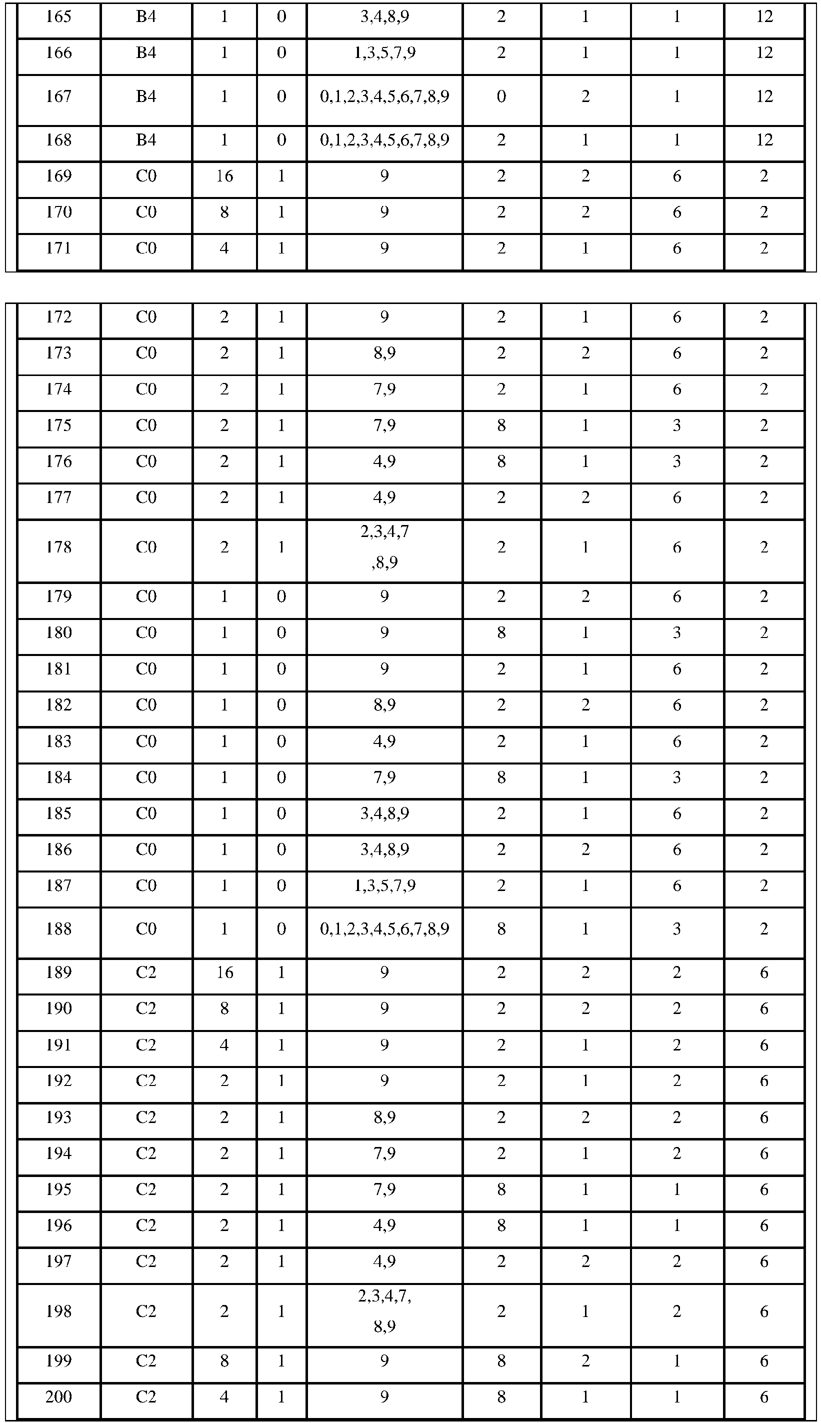

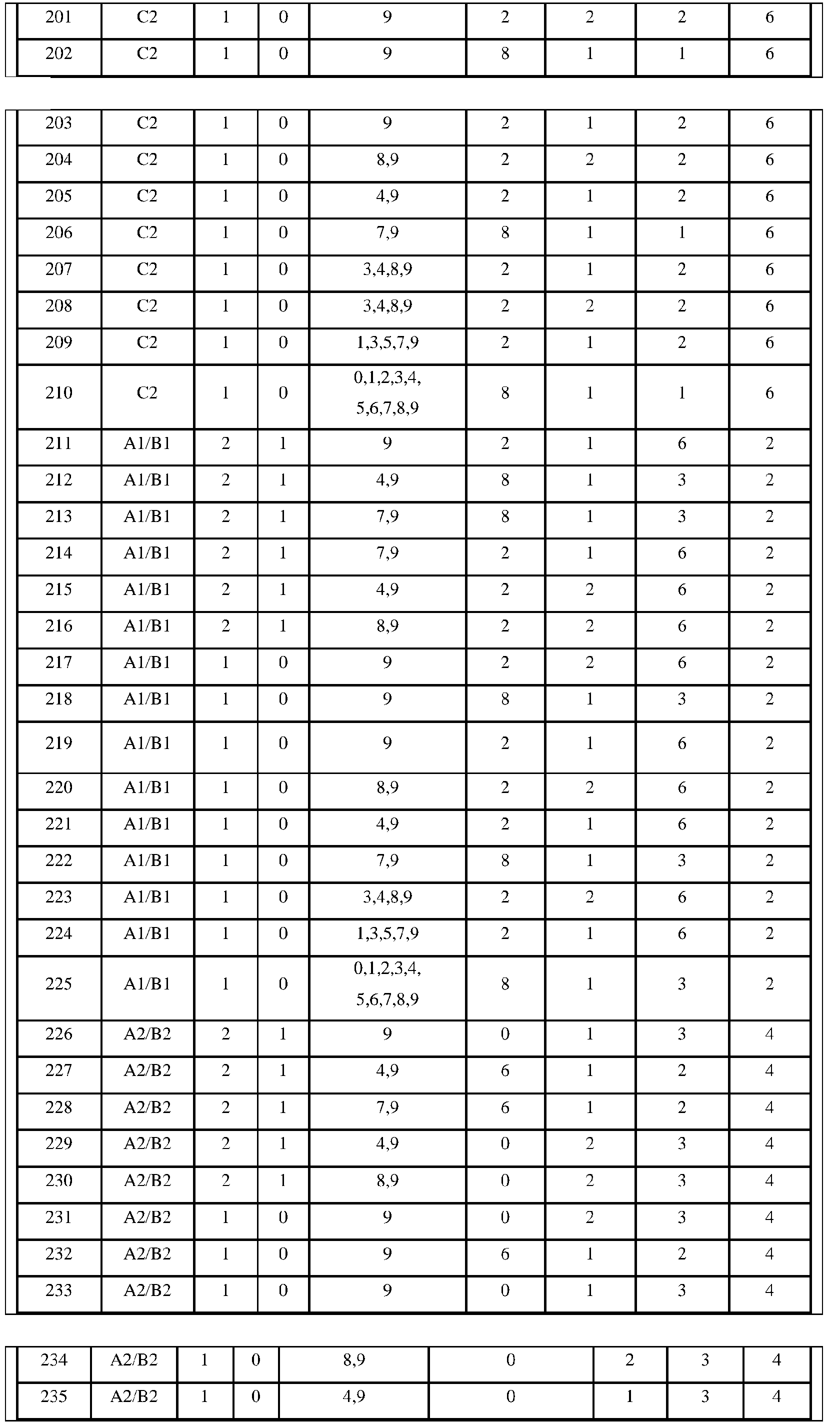

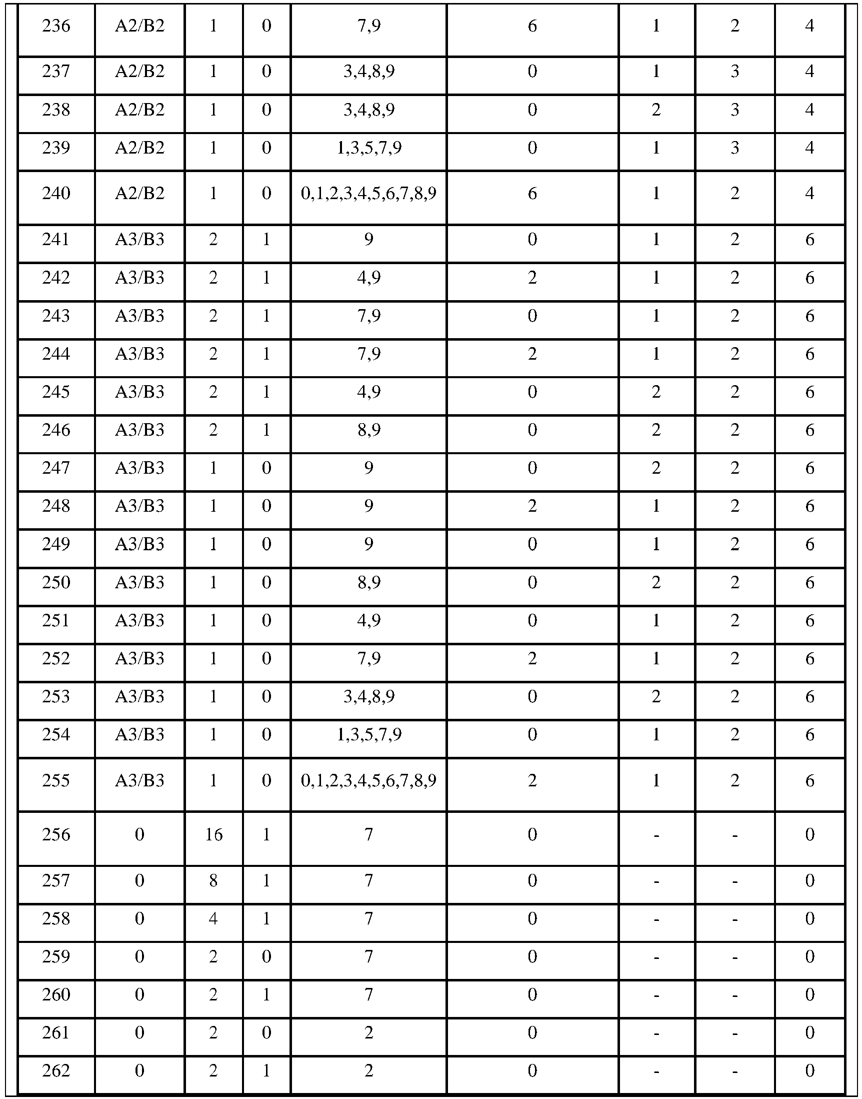

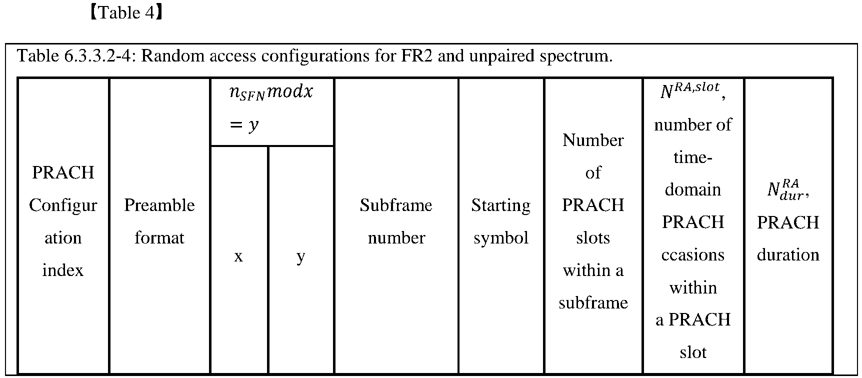

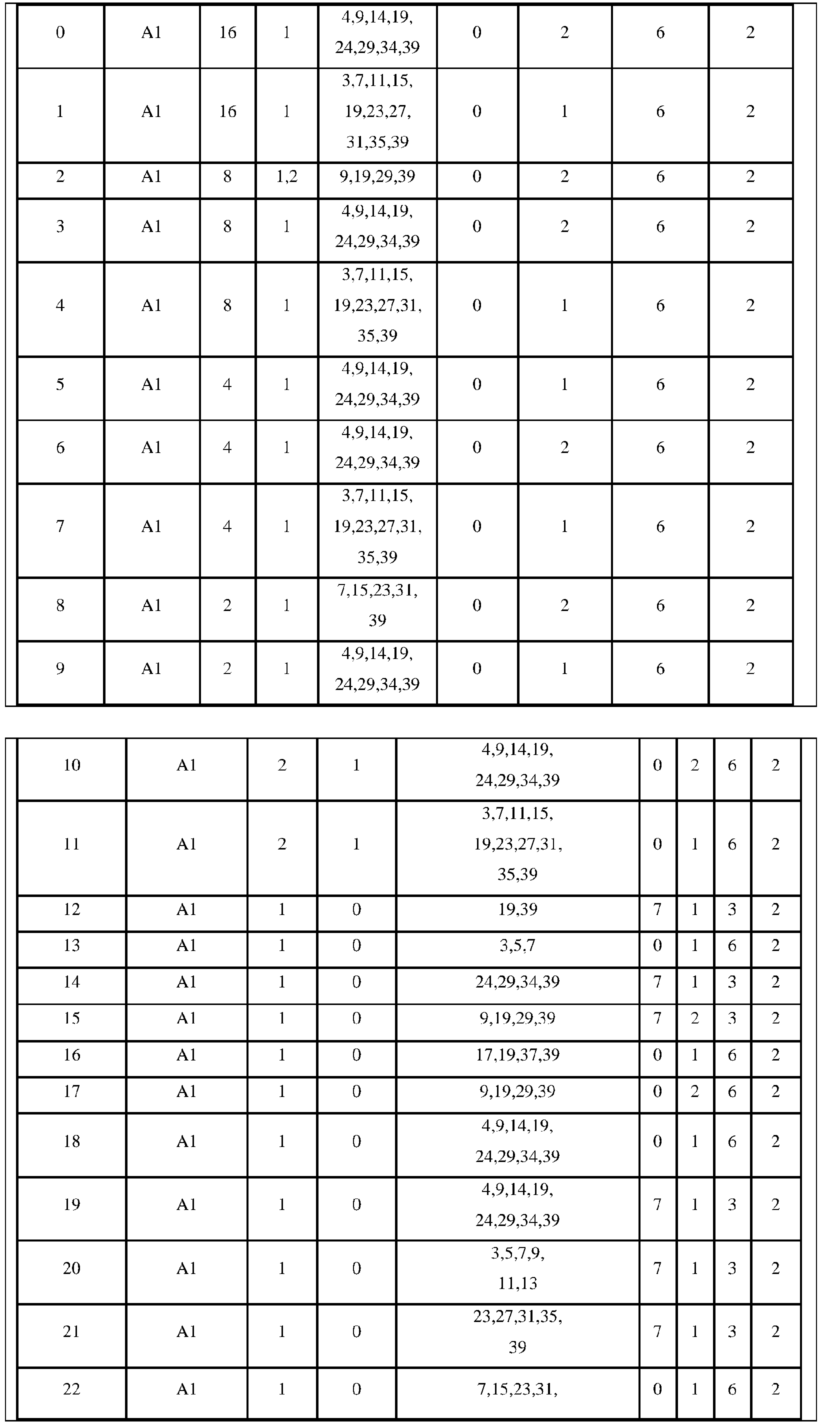

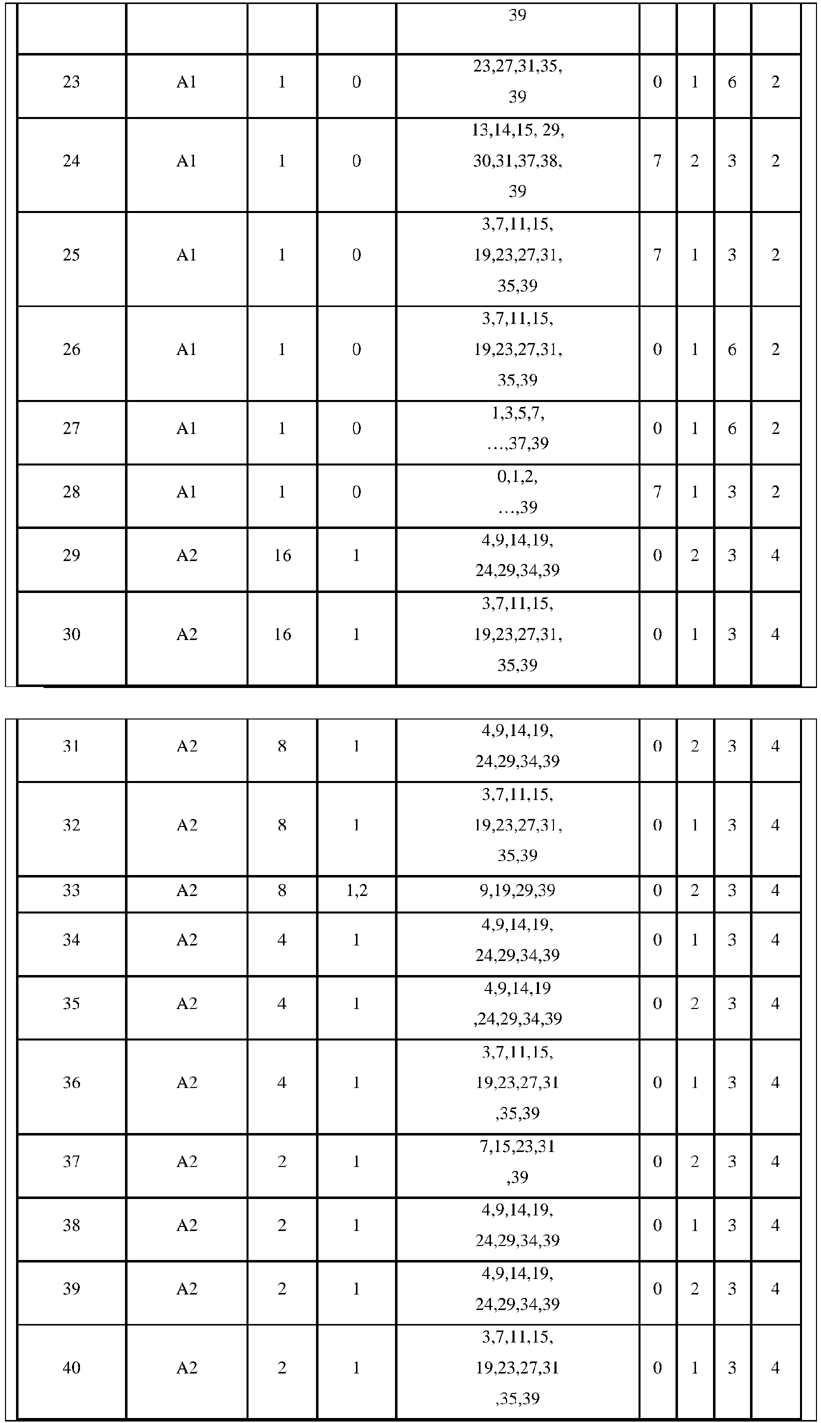

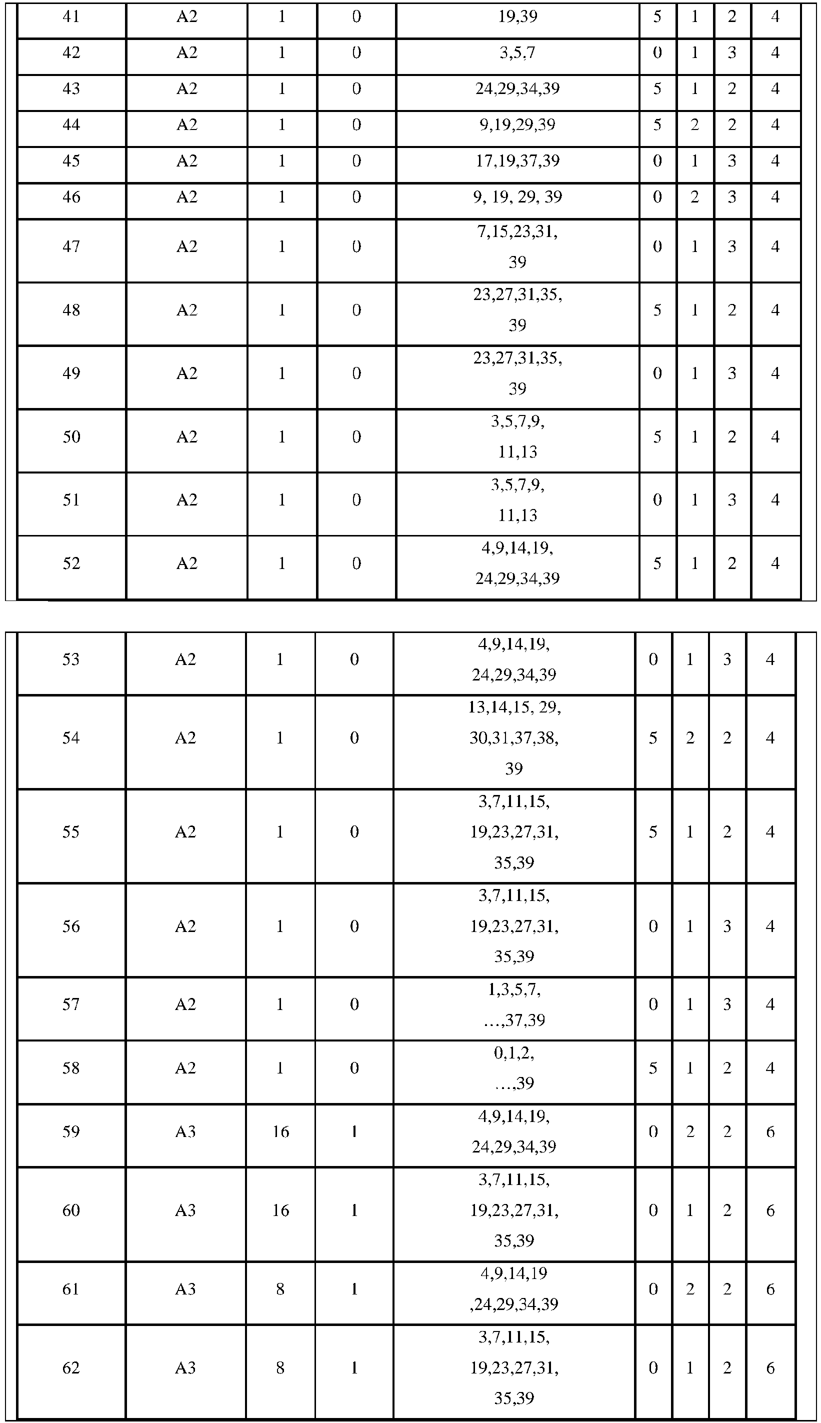

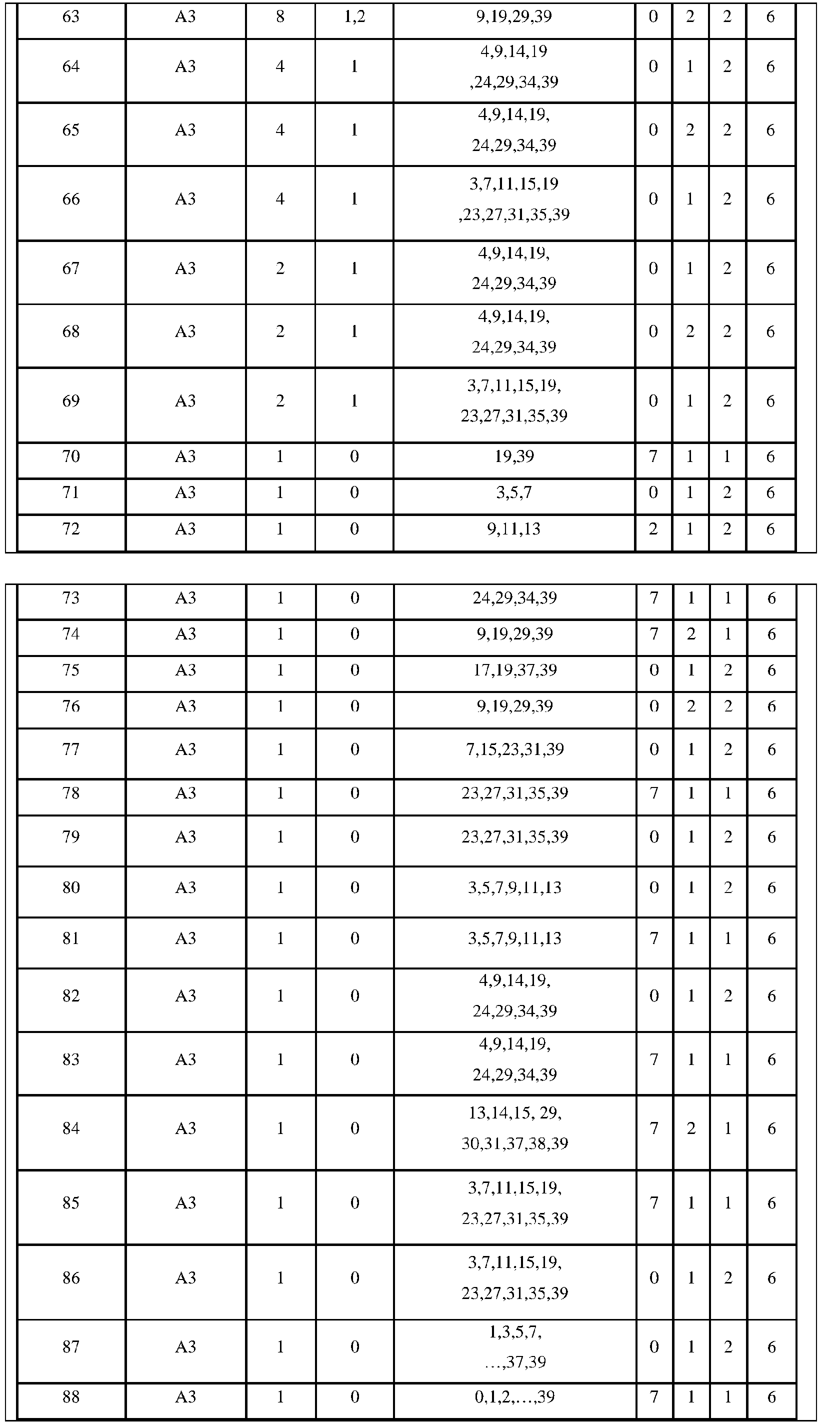

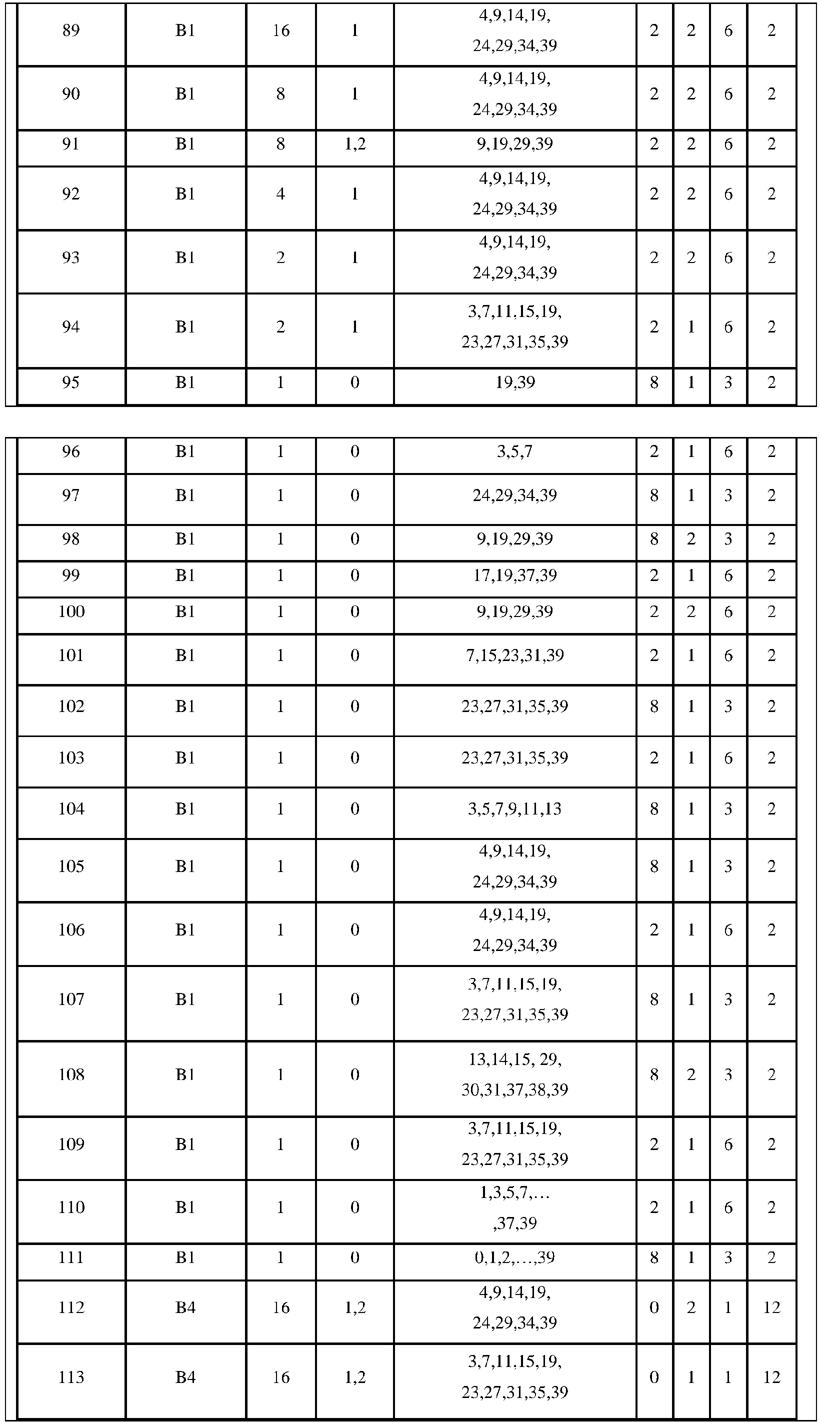

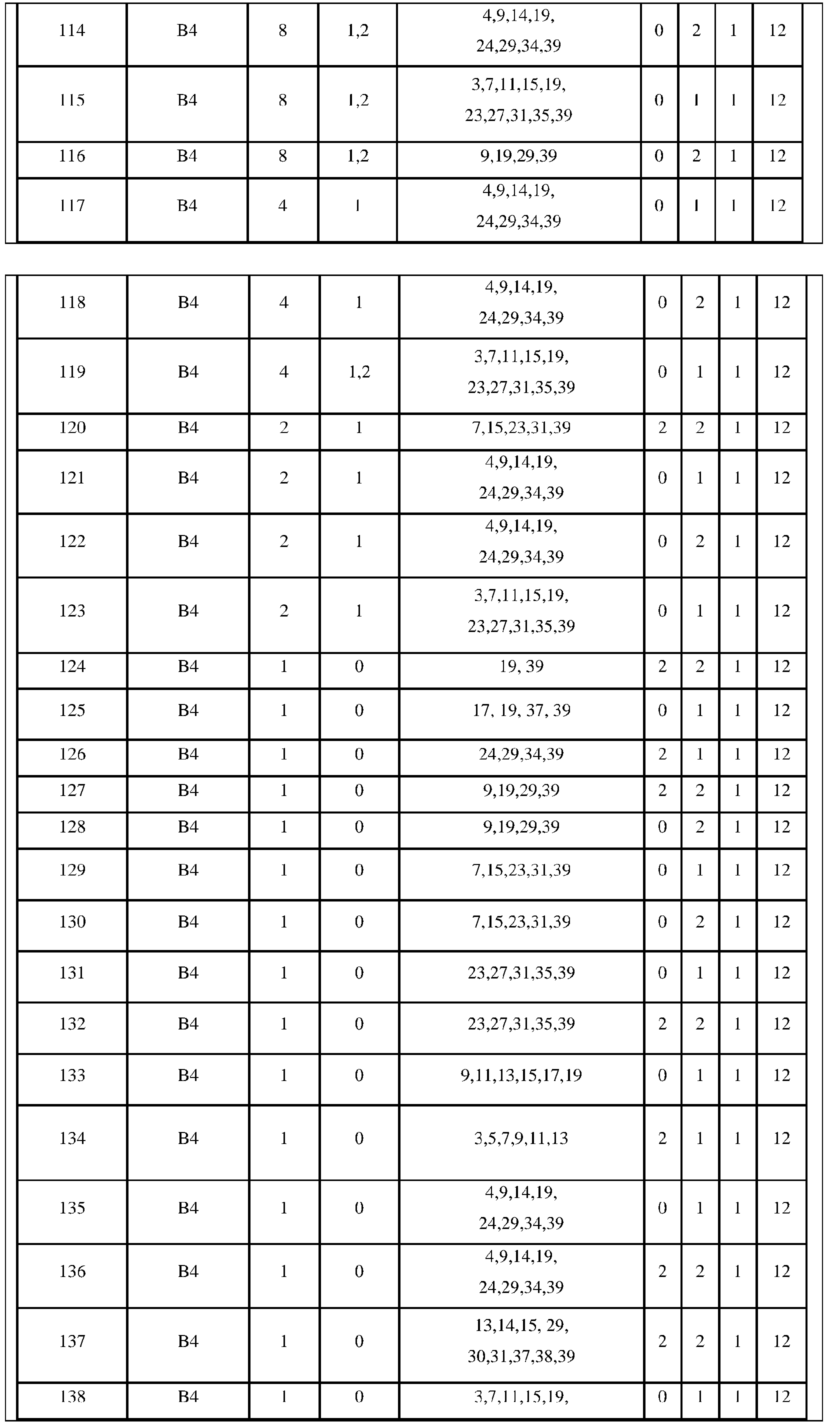

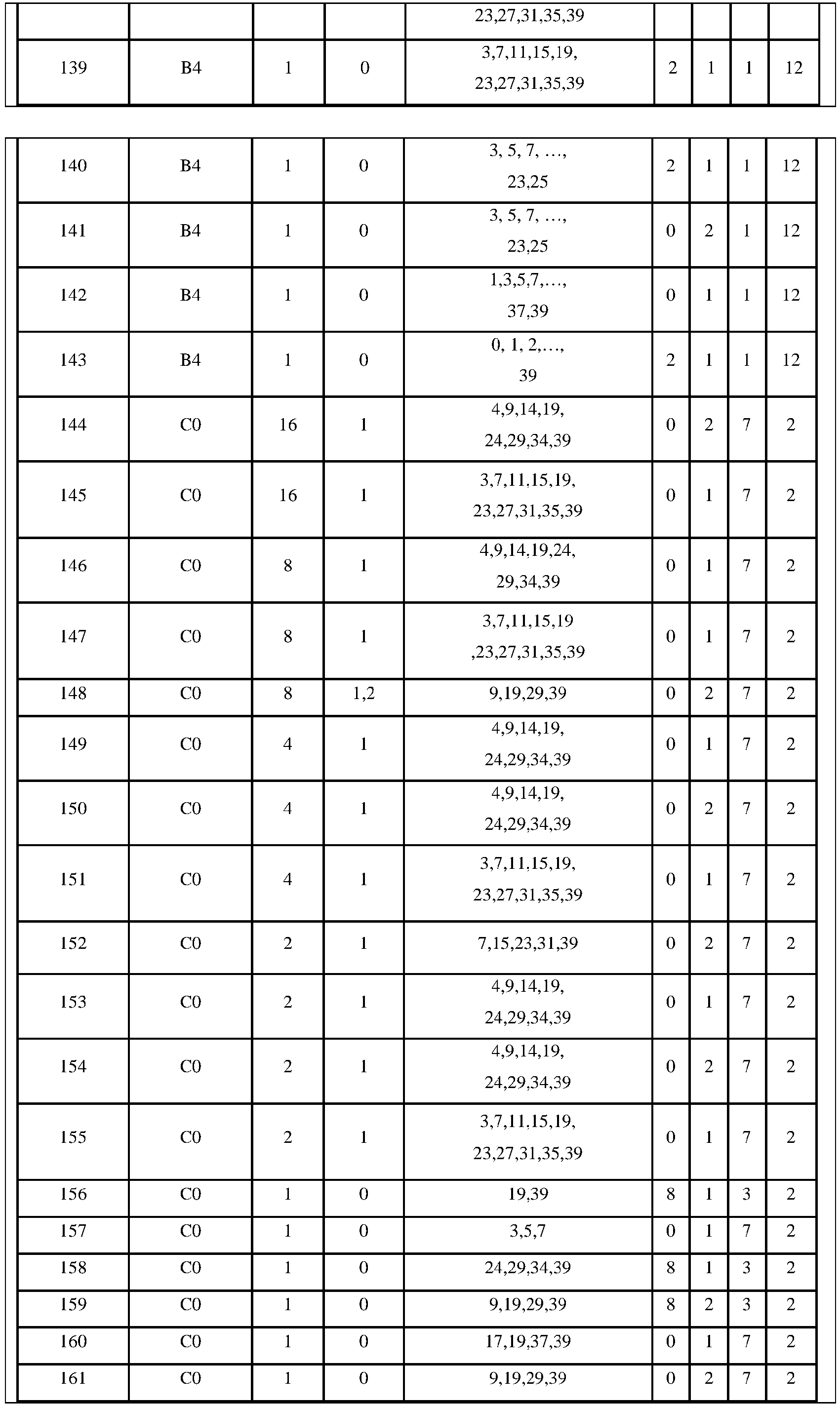

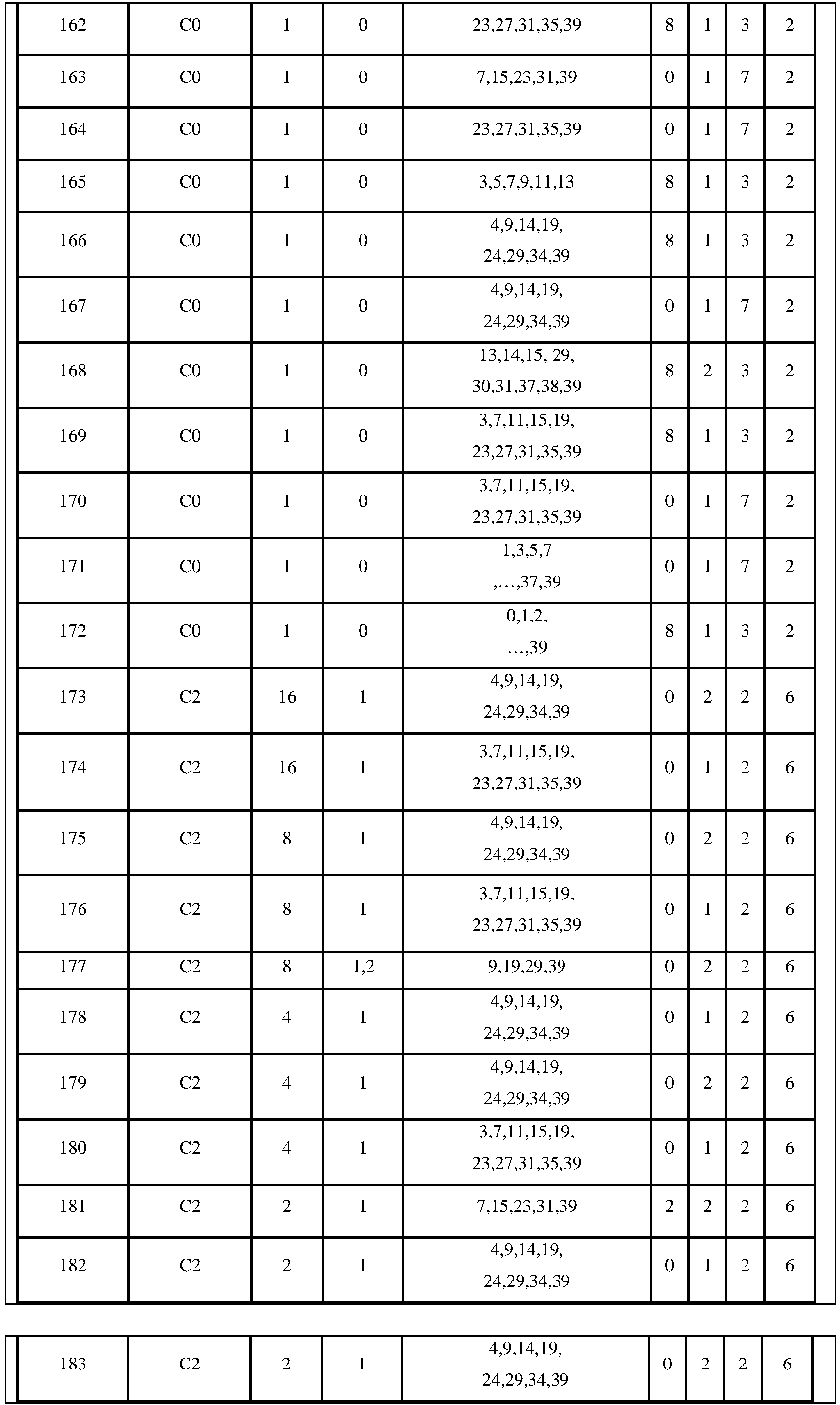

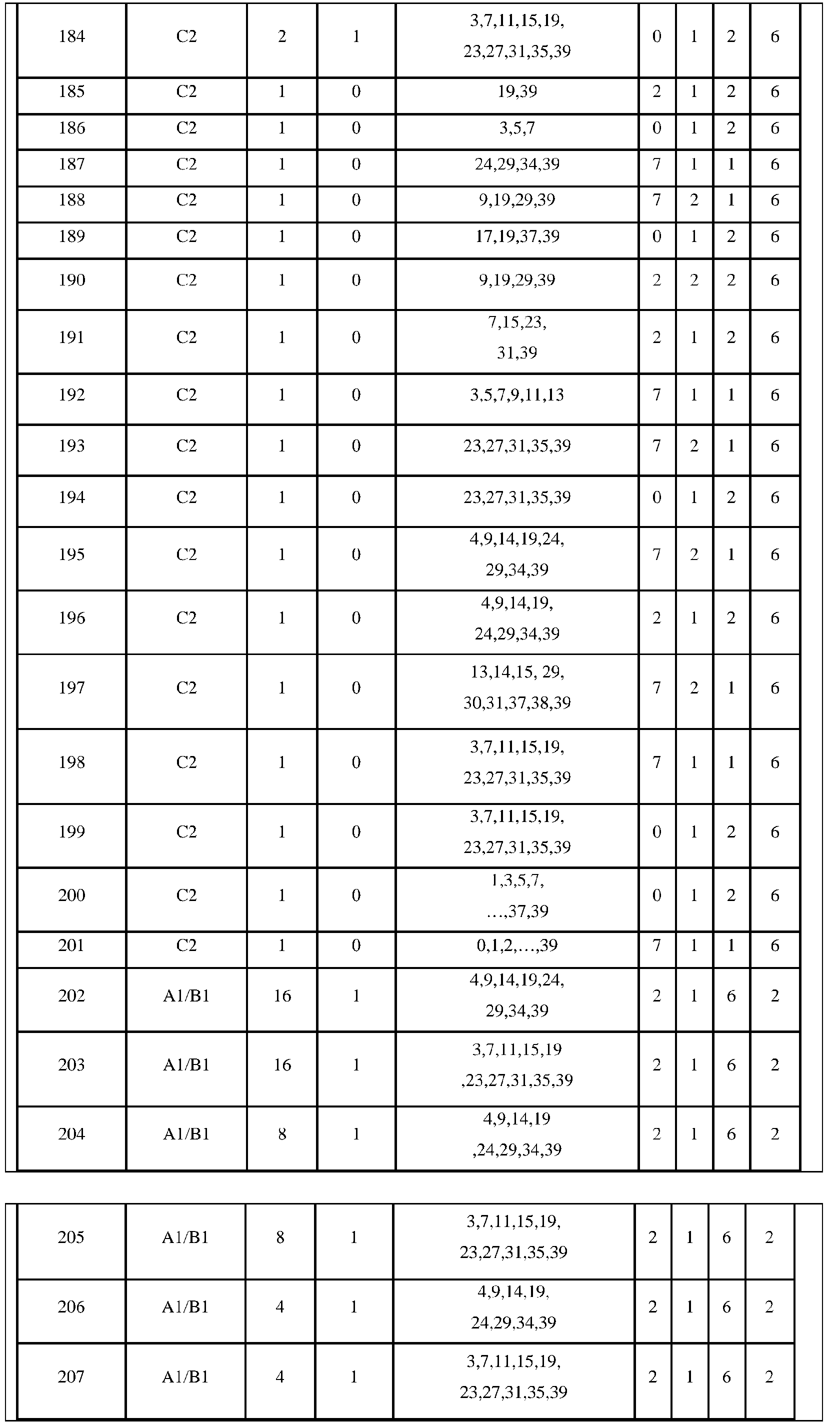

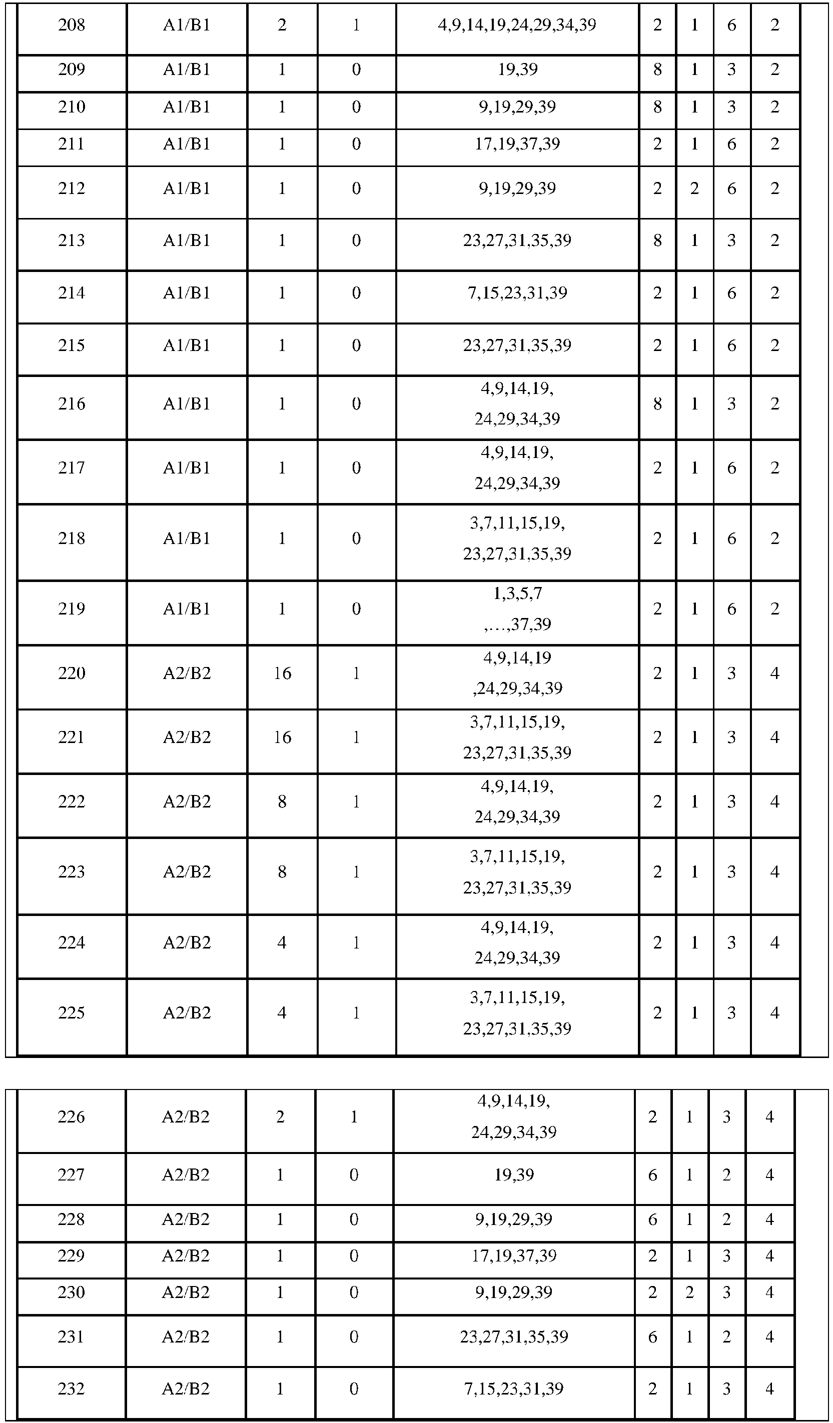

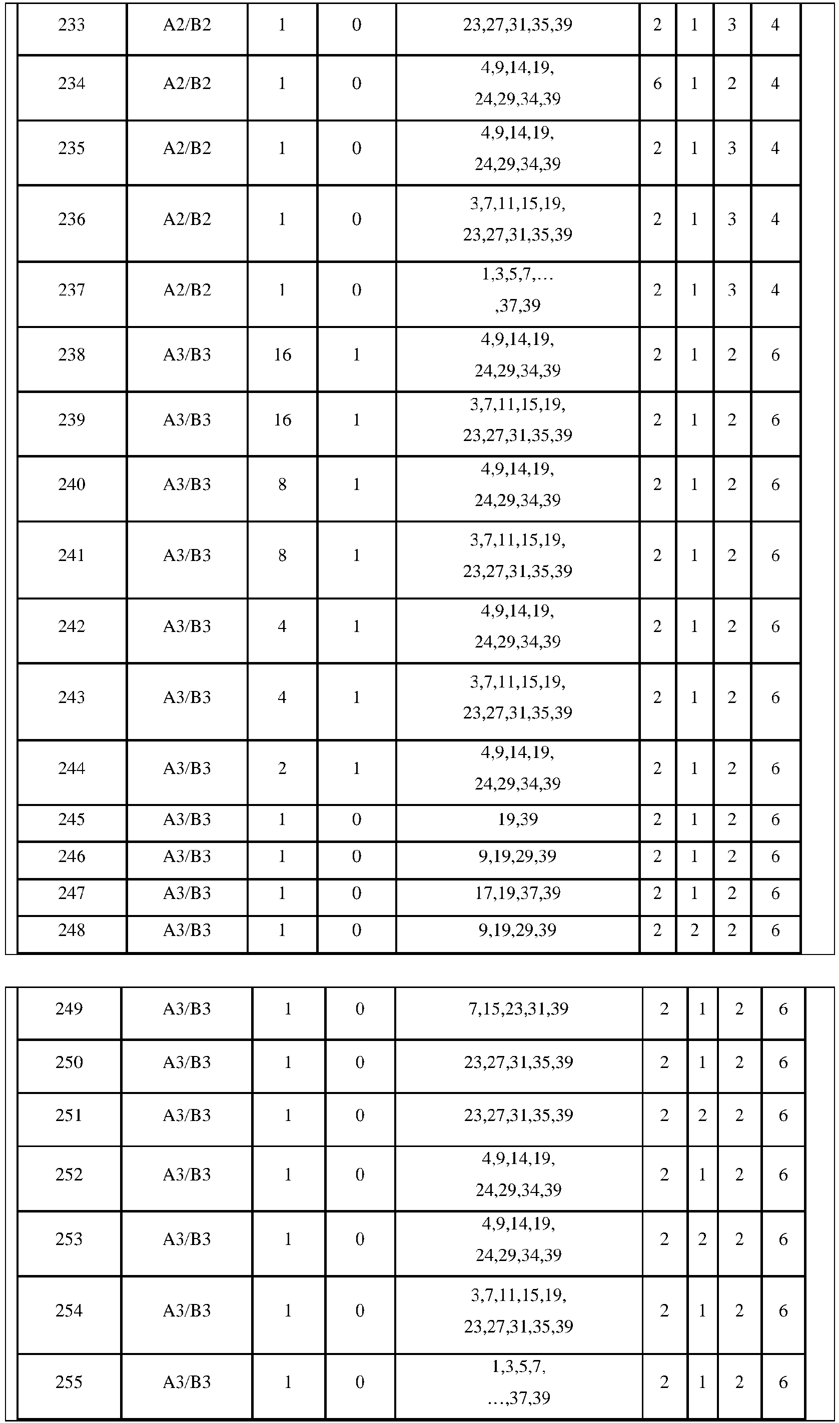

For example, in embodiments described below, the ROs may be ROs based on one of Tables 2 to 4 above.

The contents described above can be applied by being combined with methods according to the present disclosure described below, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell (cell operating in the licensed band (L-band)) and/or a U-cell (cell operating in the unlicensed band (U-band)) defined in the NR system or the U-Band system.

NR supports multiple numerologies (or subcarrier spacing (SCS)) for supporting diverse 5G services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz to overcome phase noise.

An NR frequency band is defined as two types of frequency ranges FR1 and FR2. FR1 and FR2 may be configured as shown in Table 5 below. FR2 may mean millimeter wave (mmW).

**[Table 5]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, when a PRACH repetition scheme is introduced for coverage enhancement in NR, a RACH resource partitioning method for PRACH repetition and a related UE/base station operation are proposed. In the present disclosure, 'PRACH transmission', 'RACH transmission' or 'preamble transmission' may be interpreted/replaced as 'MSG1 transmission'.

Various RAN1 work items are defined to distinguish UE/base station operations based on a RACH resource (e.g., PRACH preamble index, etc.). As an example, UEs related to redcap, small data transmission, Msg. 3 PUSCH repetition, etc., are defined to select a specific preamble index to request from the base station whether to use a corresponding feature in a PRACH preamble transmission step. However, when each operation separately created for each work item are defined, an implementation complexity of the UE/base station may be increased.

Therefore, a concept of "Feature Combination" has been introduced to efficiently support UE/base station operations that need to be distinguished by using the RACH resource (e.g., PRACH preamble index, etc.) in a RAN2 Rel-17 RACH partitioning work item. That is, the base station configures/indicates to the UE that a specific feature or a combination o f specific features is supported by configuring a specific PRACH resource (e.g., preamble start index and total number indication). The UE that intends to use/request a specific feature and/or a combination of specific features may select one of preamble indices of a region allocated to the specific feature and/ or the combination of the specific features desired by itself during the RACH procedure to transmit a PRACH preamble. RRC parameters for this operation may be "FeatureCombinationPreambles" and "FeatureCombination". Table 6 below shows the "FeatureCombinationPreambles" and "FeatureCombination".

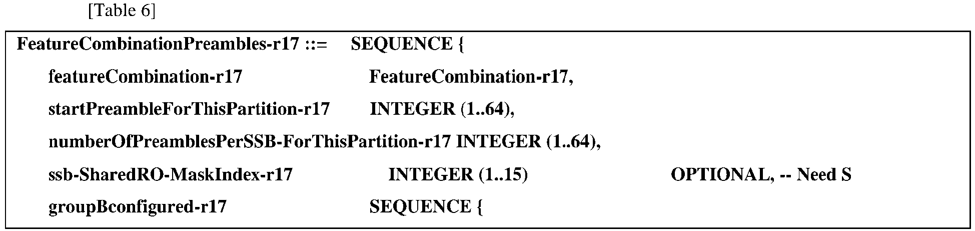

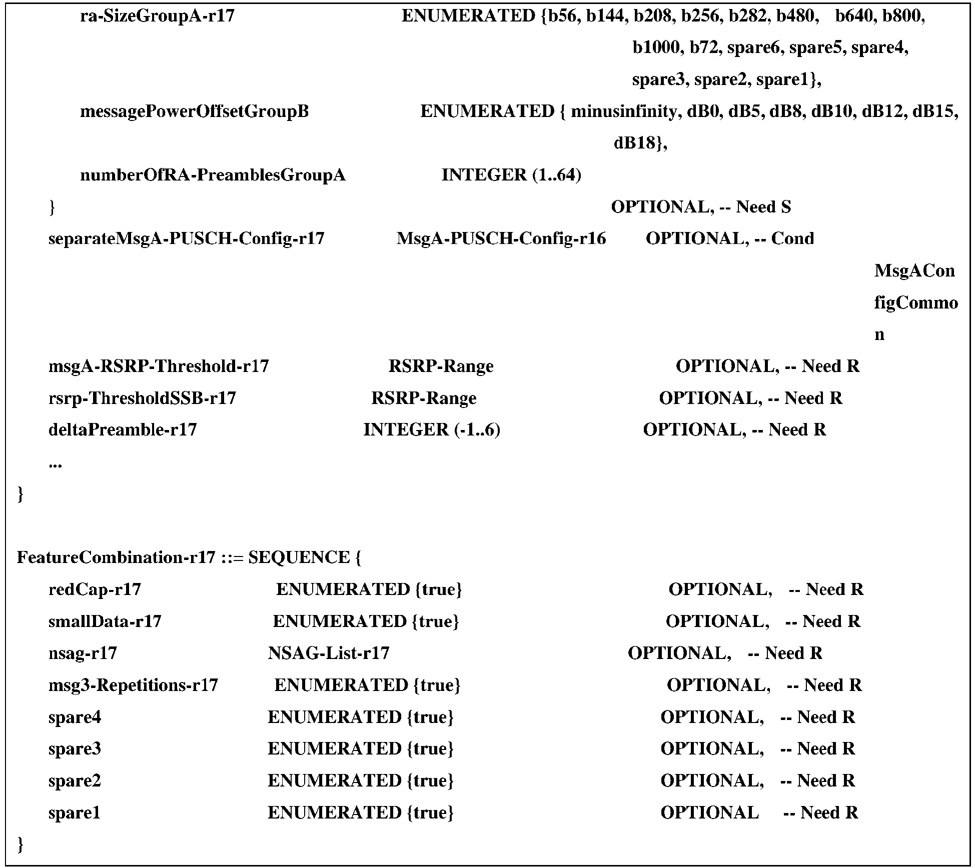

A plurality of FeatureCombinationPreambles parameters may be configured within RACH-ConfigCommon. Preamble index intervals corresponding to each region (i.e., a region/partition based on a preamble(s) belonging to each of the plurality of FeatureCompanyPreamble parameters) need to be configured not to overlap. In addition, features and/or combinations of features configured in respective regions also need to be configured to not overlap with each other. As described above, the parameter(s) for the random access procedure may be initialized/determined based on the RACH resource(s) (e.g., preamble(s)) selected by the UE.

In the present disclosure, a `RACH resource' (or `PRACH resource') may be interpreted/replaced as a random access resource. For example, a FeatureCombination (e.g., a feature or a combination of features) related to RACH resources may be interpreted/replaced as FeatureCombination related to a set of random access resources.

In addition to the RACH-ConfigCommon allocated to existing BWP-UplinkCommon, the base station may additionally allocate a RACH configuration through AdditionalRACH-Config-r17. The BWP-UplinkCommon may be configured based on an SIB (e.g., SIB1). The RACH procedure may be performed as follows by a Rel-16 UE/Rel-17 UE.

For Rel-16 UEs that may not read AdditionalRACH-Config-r17, the UEs perform the RACH procedure based on RACH-ConfigCommon allocated to BWP-UplinkCommon.

For UEs of Rel-17 and later that may read AdditionalRACH-Config-r17, the UEs perform the RACH procedure by confirming RACH-ConfigCommon allocated to the existing BWP-UplinkCommon and RACH-ConfigCommon allocated to the AdditionalRACH-Config-r17.

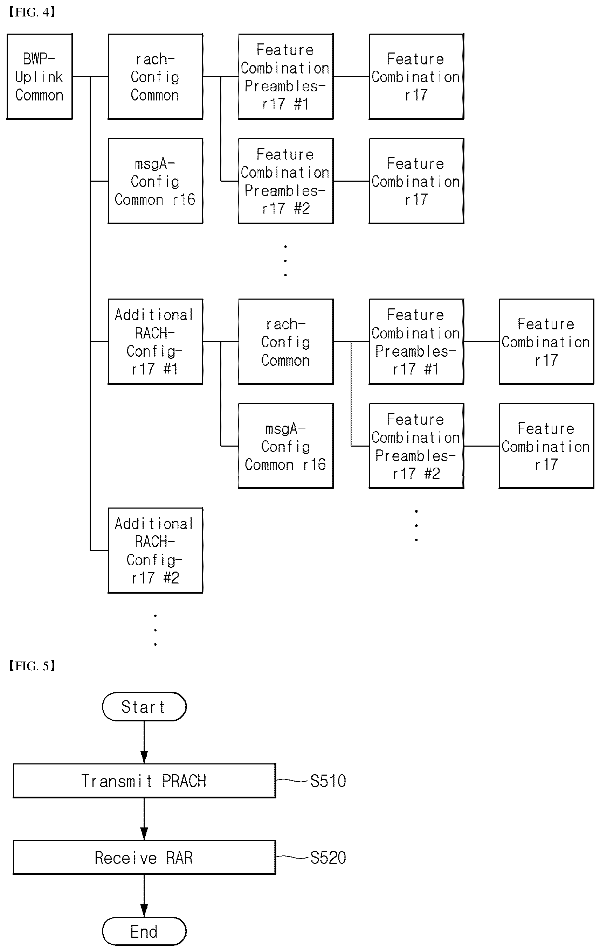

In addition, one or more FeatureCombinationPreambles described above may be configured in the RACH-ConfigCommon allocated to the existing BWP-UplinkCommon. One or more FeatureCombinationPreambles described above may be also configured in the RACH-ConfigCommon allocated to the AdditionalRACH-Config-r17. Hereinafter, this will be described with reference to FIG. 4.

FIG. 4 illustrates an RACH partitioning related RRC parameter. Specifically, FIG. 4 illustrates a connection relationship/up-and-down relationship of the RACH partitioning related RRC parameters.

Respective parameters will be specifically described with reference to FIG. 4. For convenience of description, an RRC parameter (e.g., BWP-UplinkCommon parameter) is described as a parameter name (e.g., BWP-UplinkCommon).

The BWP-UplinkCommon includes i) rach-ConfigCommon, ii) msgA-ConfigCommon, and iii) one or more AdditionalRACH-Config #1, #2, ....

Each AdditionalRACH-Config includes i) rach-ConfigCommon and ii) msgA-ConfigCommo.

Each rach-ConfigCommon includes one or more FeatureConbinationPreambles.

Each FeatureConbinationPreambles includes FeatureCombination.

Table 7 shows the RRC parameters described above.

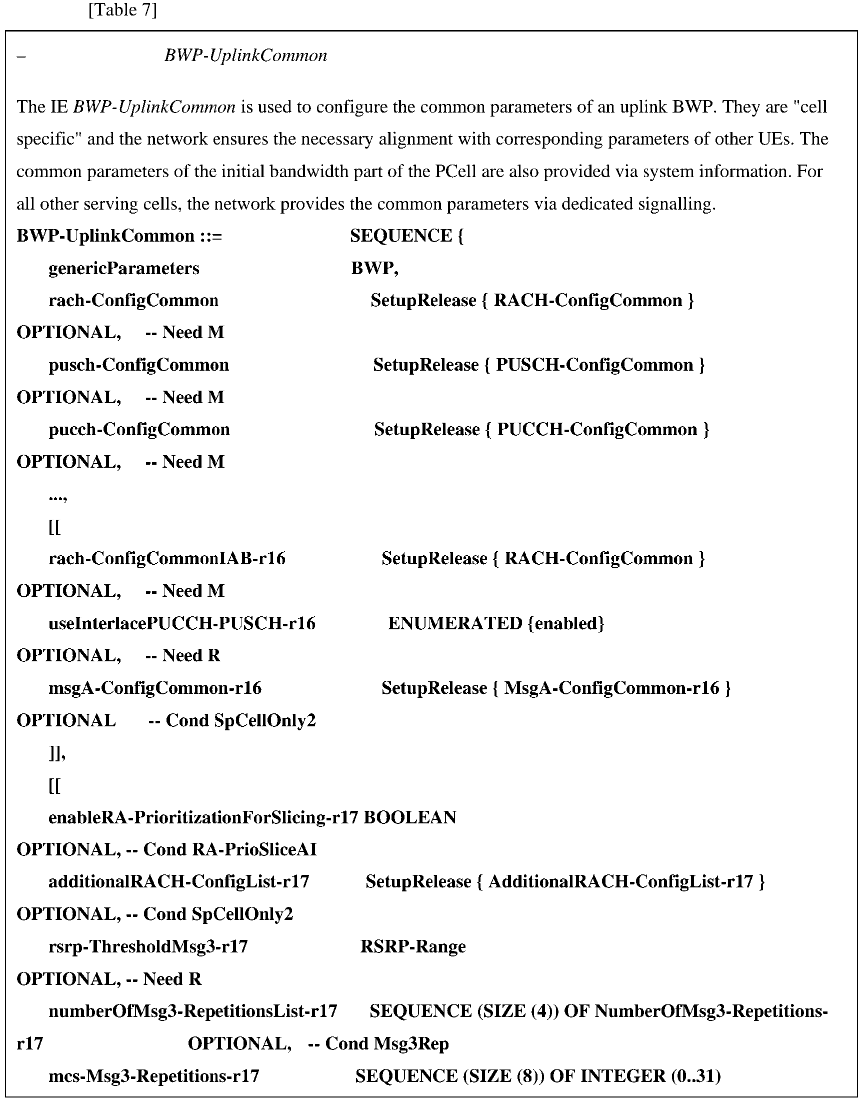

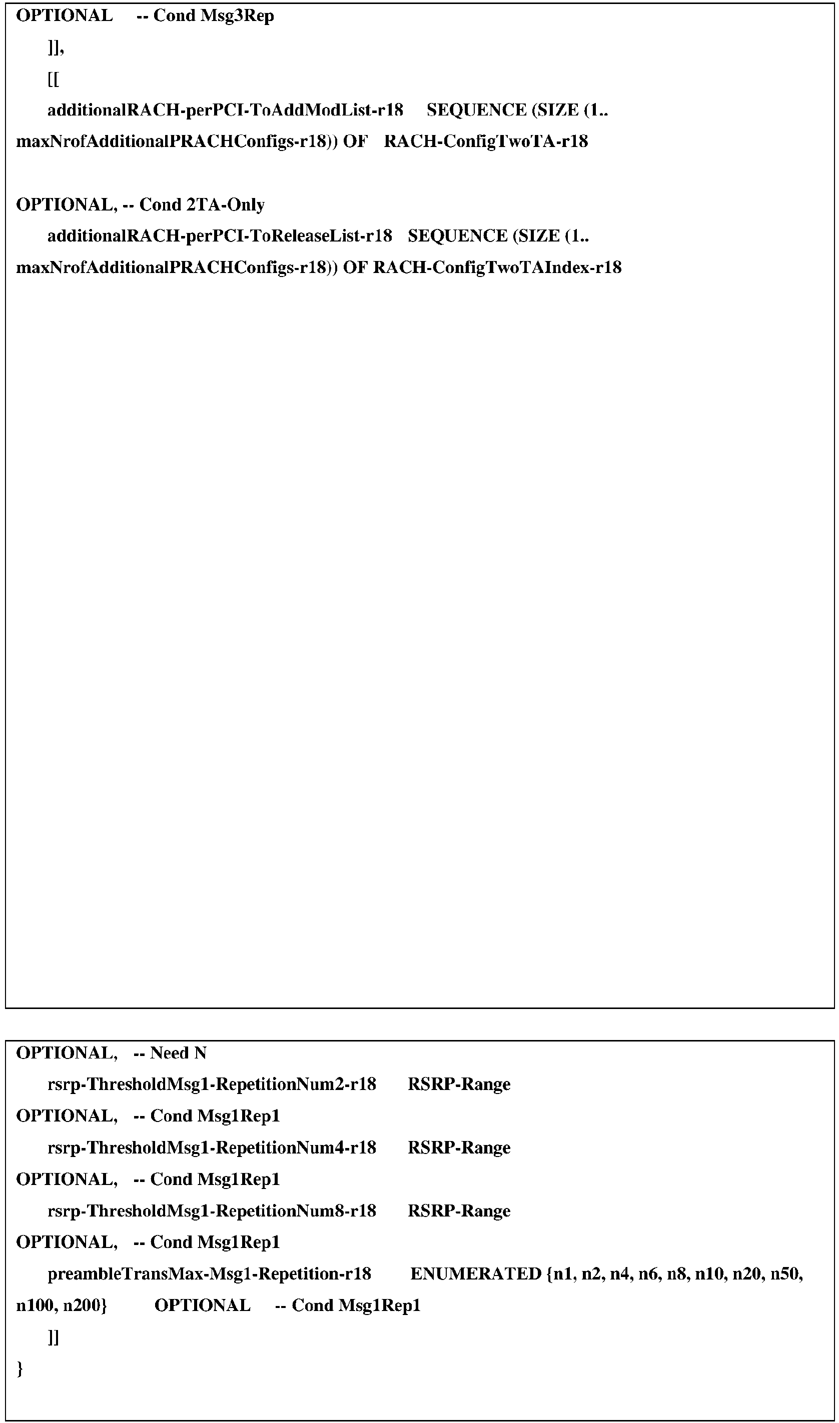

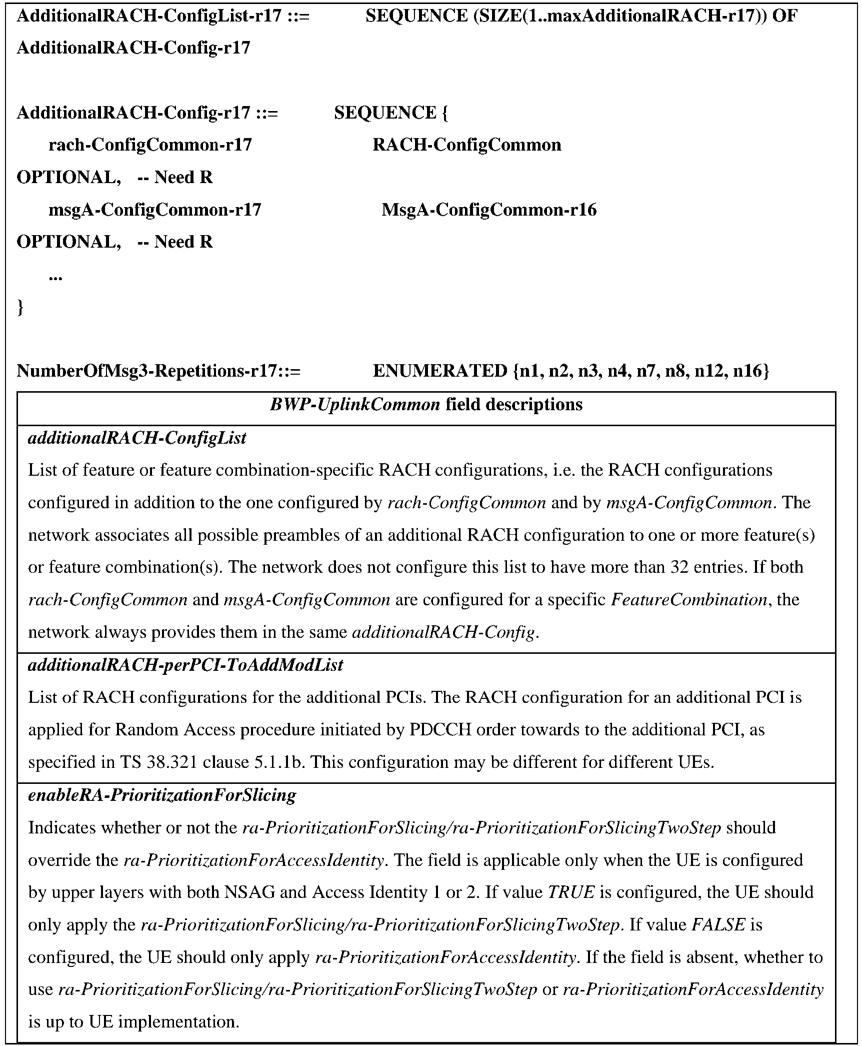

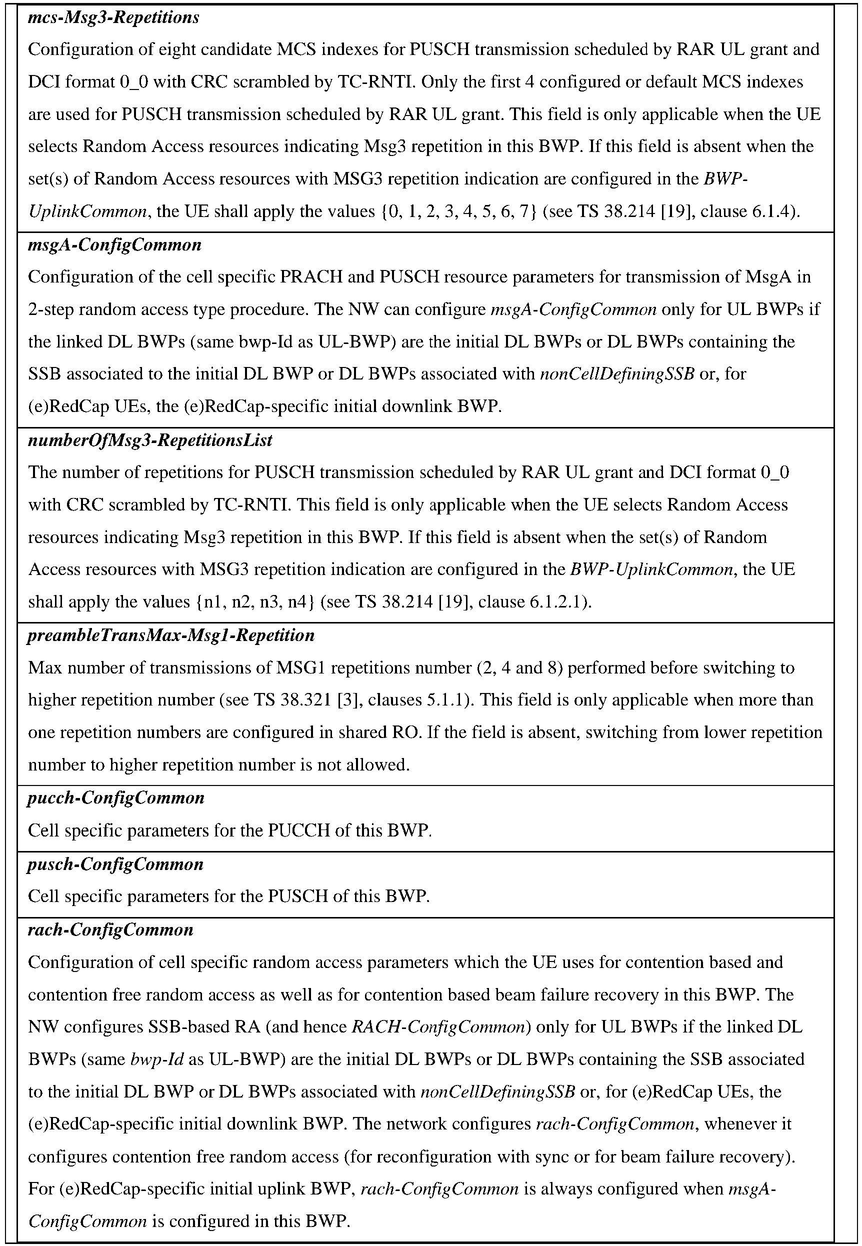

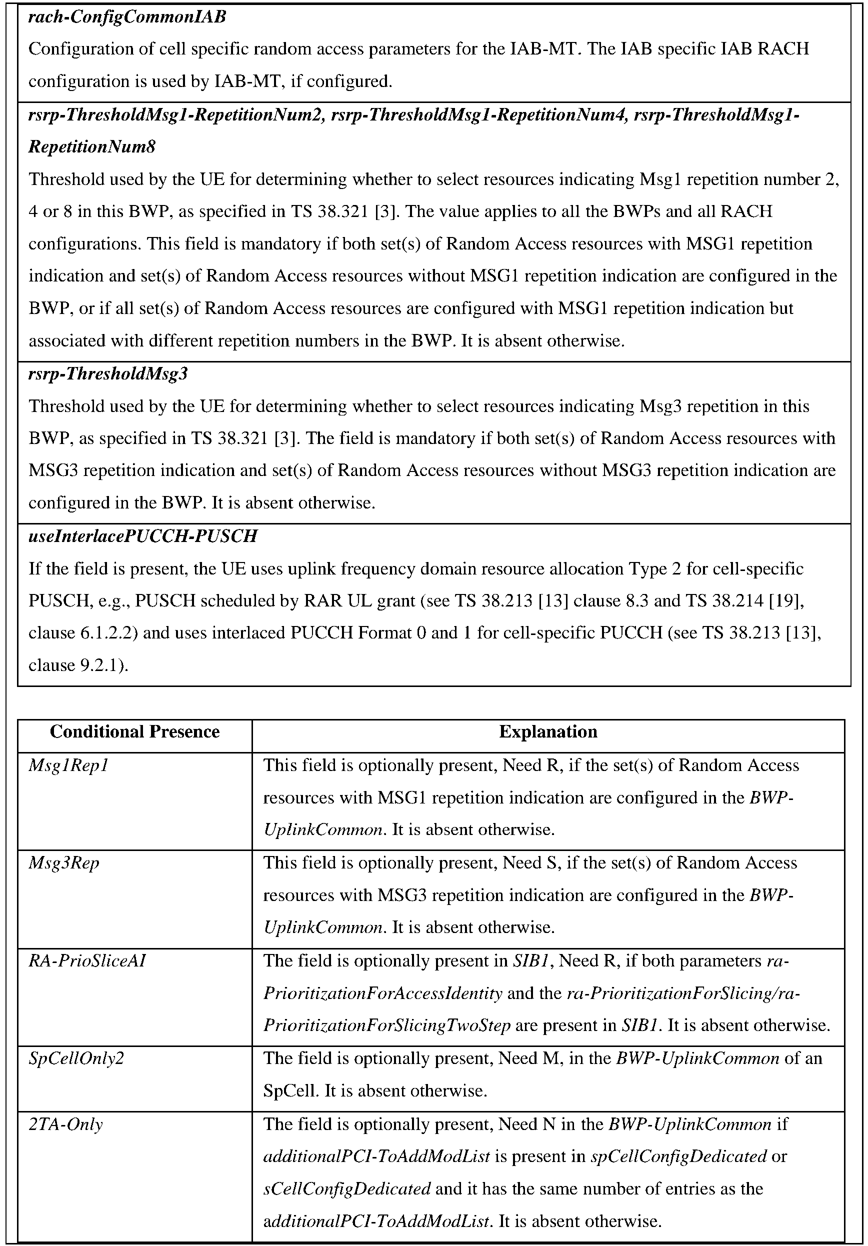

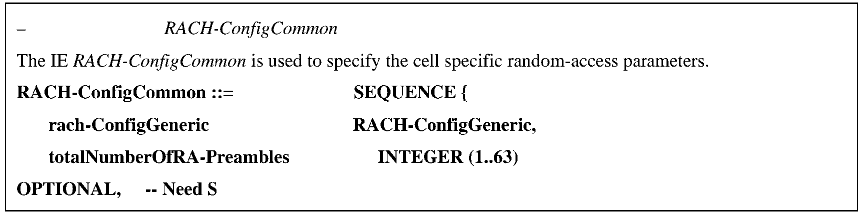

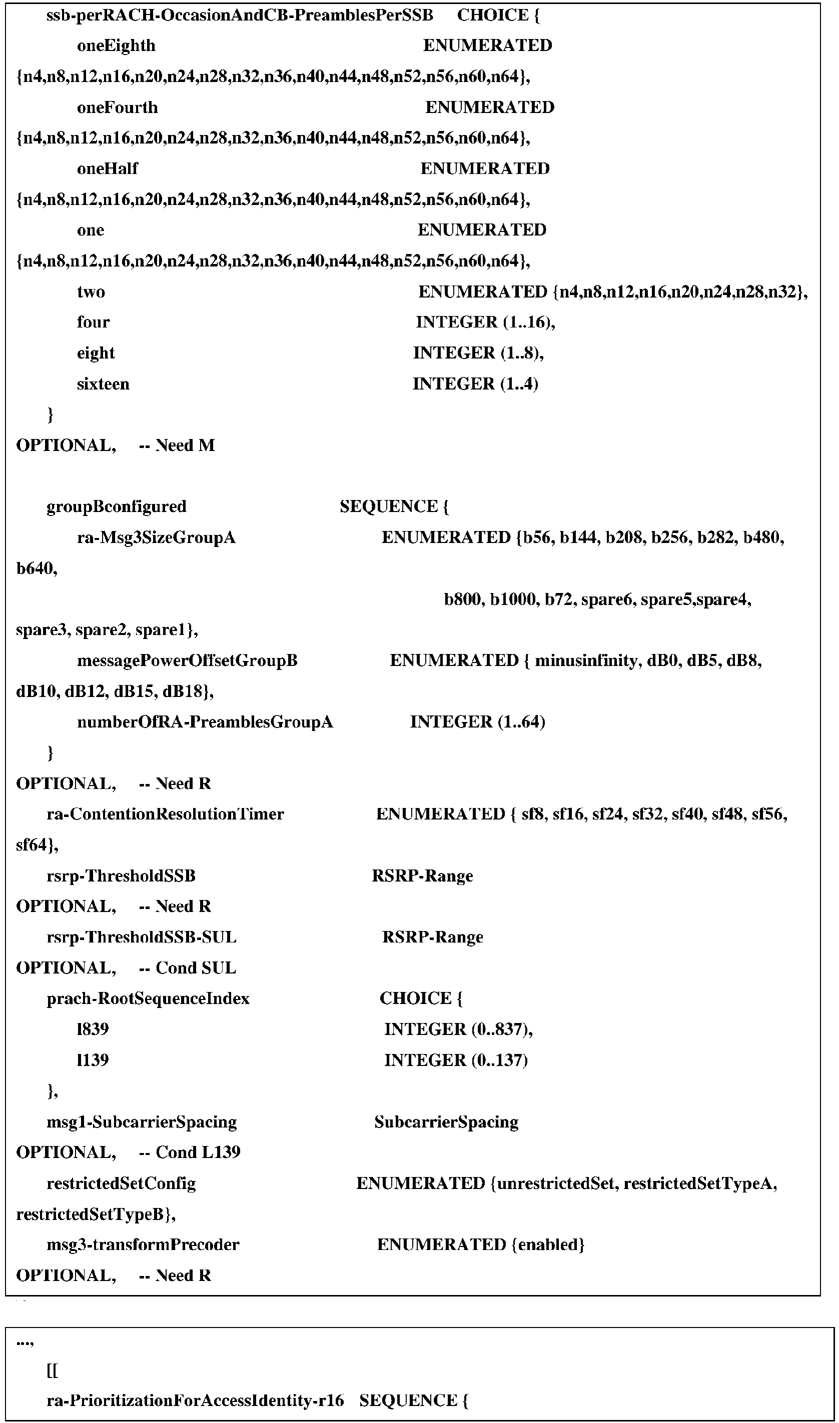

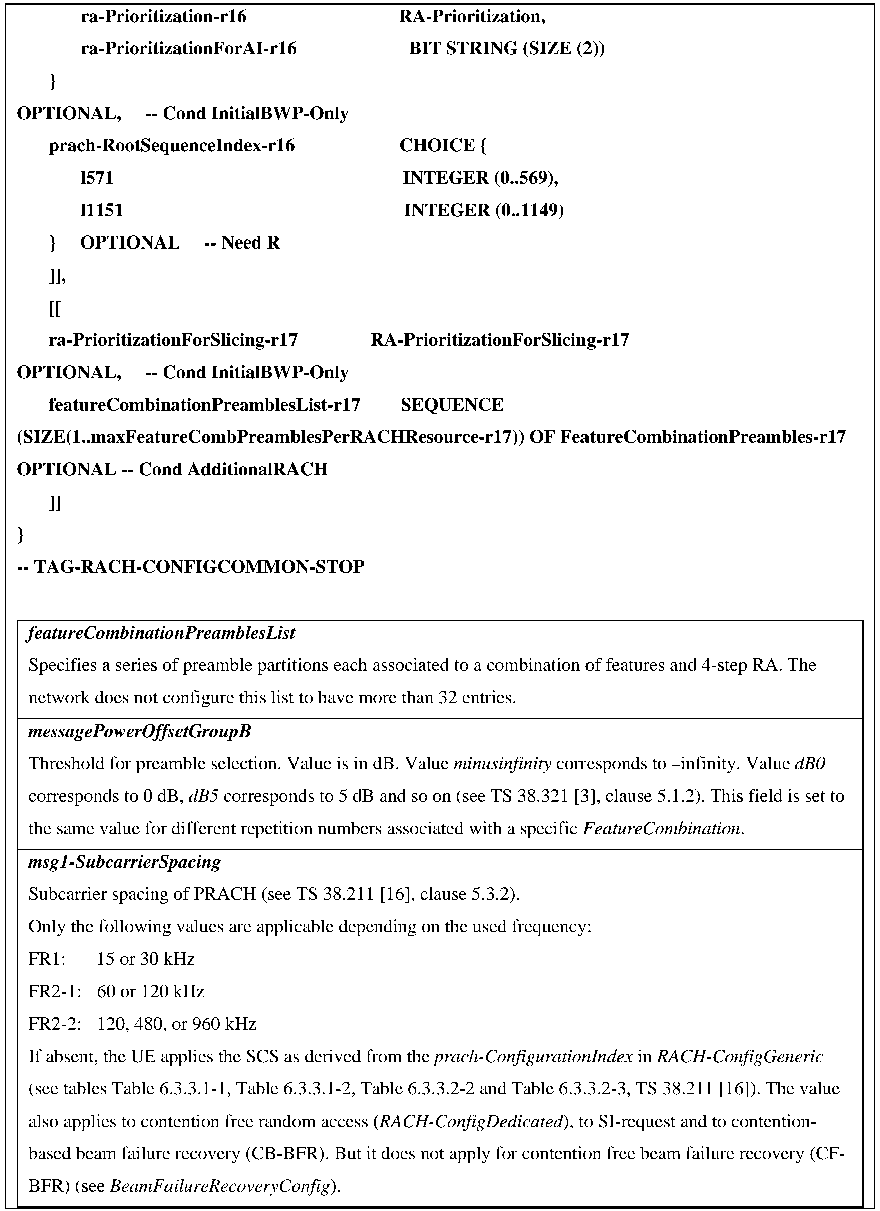

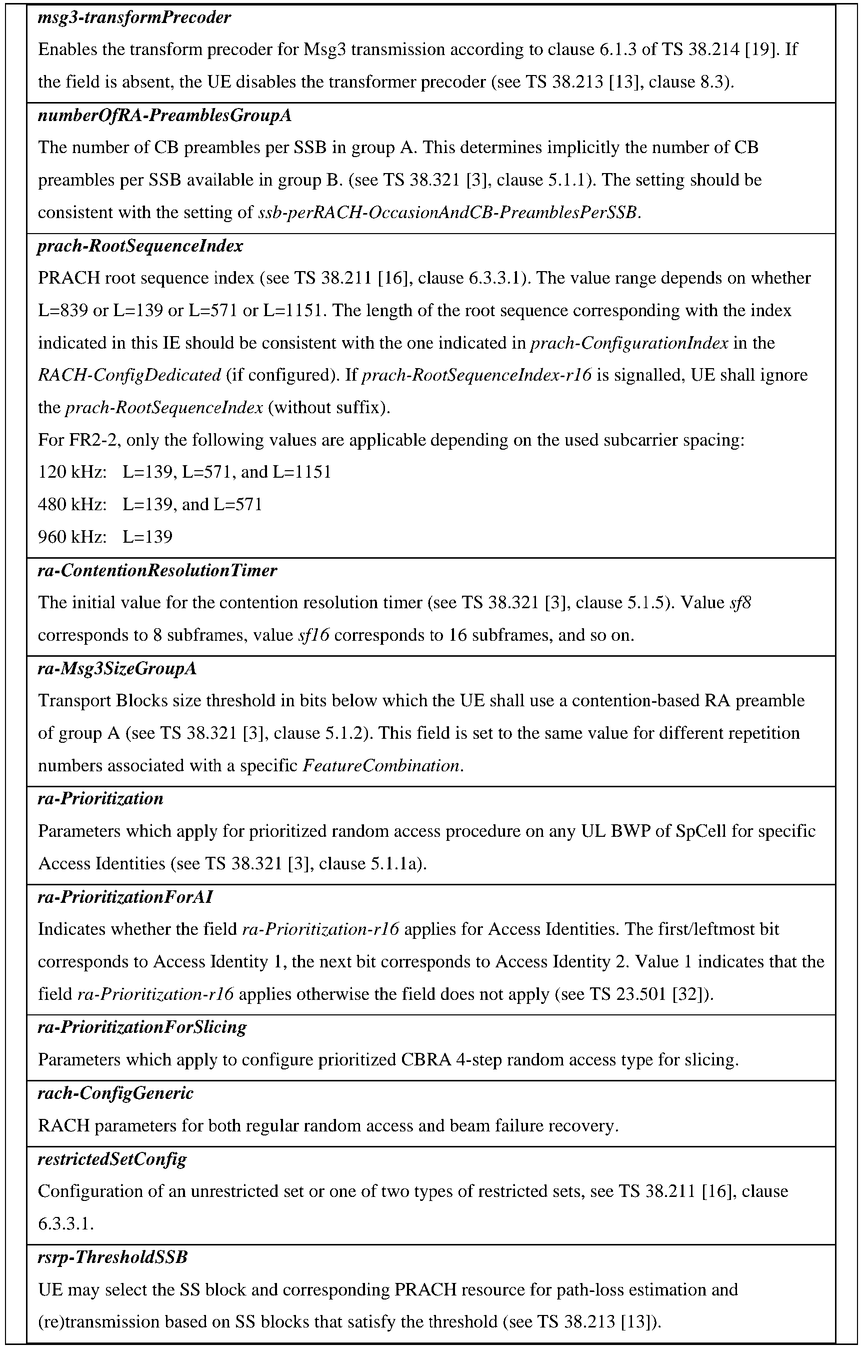

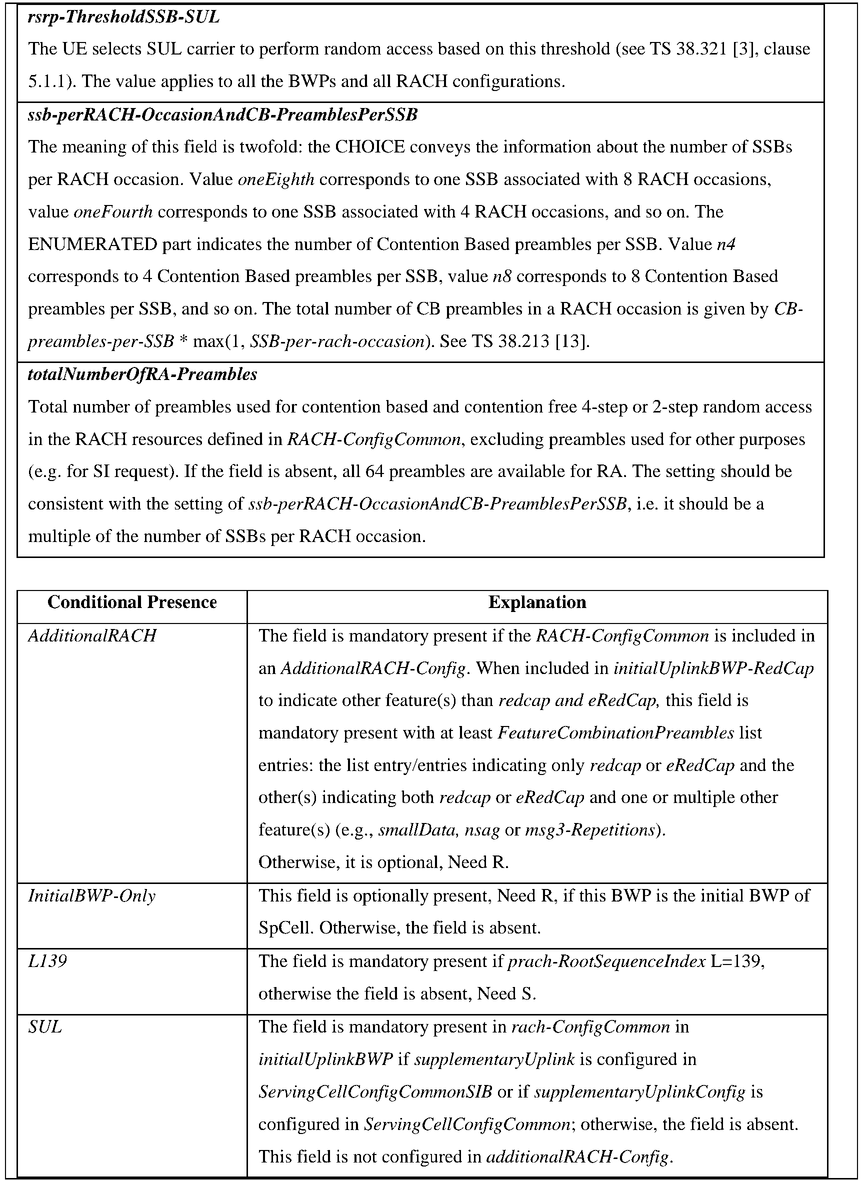

The introduction of PRACH preamble repetition transmissions is being considered to enhance UL coverage in the existing NR system.

When multiple PRACH resources with different repetition transmission numbers are allocated and overlapping (or collision) between the PRACH resources occurs, UE/base station operations for solving this are described below.

In the present disclosure, 'RO' denotes a RACH occasion (or PRACH occasion).

### Method of handling overlapping/collision between RACH resources

Multiple methods of allocating PRACH repetition resources with different repetition transmission numbers are being considered. In this instance, when considering a method of allocating RACH resources so that multiple PRACH repetition resources with different repetition transmission numbers are distinguished based on an RO level, ROs corresponding to different RACH configurations may overlap each other on a time domain and/or a frequency domain. Therefore, for this case, it is necessary to define the UE/base station operations. In the present disclosure, the 'overlapping of ROs' may be interpreted/replaced as the 'collision of ROs'.

Based on the overlapping/collision of ROs configured to the UE by the base station, the UE may configure/determine all or part of the ROs as invalid ROs. The ROs may be ROs based on different configurations (e.g., different repetition numbers).

Specifically, when ROs corresponding to a RACH configuration assigned to a specific repetition number overlap all or part of ROs corresponding to RACH configurations assigned to different repetition numbers on the time domain and/or the frequency domain, all or part of the overlapping ROs may be configured/determined as invalid ROs.

Hereinafter, the configuration/determination of the invalid RO may mean configuration/determination by the UE and/or the base station. For example, if the UE and/or the base station configures/determines a specific RO as an invalid RO, the UE does not use the specific RO, and the base station does not expect to receive a PRACH based on the specific RO.

A method of configuring/determining the invalid RO(s) is described in detail below.

### Method 1

A method may be considered to process only ROs corresponding to a specific RACH configuration (and/or a specific RACH partitioning) among overlapping ROs as invalid ROs. For example, ROs corresponding to a specific RACH configuration (and/or a specific RACH partitioning) may be i) ROs based on a specific RACH configuration (and/or a specific RACH partitioning), ii) ROs related to a specific RACH configuration (and/or a specific RACH partitioning), or iii) ROs configured based on a specific RACH configuration (and/or a specific RACH partitioning). For example, referring to FIG. 4 and Table 7, the RACH configuration may mean rach-ConfigCommon, and the RACH partitioning may mean FeatureCombinationPreambles.

Among multiple RACH configurations (and/or specific RACH partitionings) configured by the base station, a specific RACH configuration (and/or specific RACH partitioning) for determining the invalid RO may be defined based on at least one of the following examples.

For example, the specific RACH configuration (and/or specific RACH partitioning) may be a RACH configuration (and/or RACH partitioning) with a relatively large repetition number among the multiple RACH configurations (and/or specific RACH partitionings). As a specific example, an RO related to a RACH configuration (and/or RACH partitioning) with a largest repetition number may be determined/processed as the invalid RO.

For example, the specific RACH configuration (and/or specific RACH partitioning) may be a RACH configuration (and/or RACH partitioning) with a relatively small repetition number among the multiple RACH configurations (and/or specific RACH partitionings). As a specific example, an RO related to a RACH configuration (and/or RACH partitioning) with a smallest repetition number may be determined/processed as the invalid RO.

For example, the specific RACH configuration (and/or specific RACH partitioning) may be RACH configuration (and/or RACH partitioning) may be a RACH configuration (and/or RACH partitioning) with a lowest (or highest) priority value configured by the base station among the multiple RACH configurations (and/or specific RACH partitioning). As a specific example, an RO related to the RACH configuration (and/or RACH partitioning) with the lowest (or highest) priority value may be determined/processed as the invalid RO.

The base station may configure a priority to the UE as follows. The priority may be independently configured/indicated per RACH configuration (and/or specific RACH partitioning) via higher layer parameter.

For example, based on overlapping ROs having the same repetition number, the invalid RO may be determined based on the priority related to each RO. For example, based on the priorities of the overlapping ROs being the same, the invalid RO may be determined based on a priority number related to each RO.

For example, it may be assumed that ROs corresponding to a single PRACH resource and ROs corresponding to multiple PRACH resources with a repetition number of 2 overlap entirely or partially on the time domain and/or the frequency domain. The UE and the base station may be configured to interpret/determine the ROs corresponding to the multiple PRACH resources with the repetition number of 2 as invalid ROs.

For example, it may be assumed that the ROs corresponding to the multiple PRACH resources with the repetition number of 2 and ROs corresponding to multiple PRACH resources with a repetition number of 4 overlap entirely or partially on the time domain and/or the frequency domain. The UE and the base station may be configured to interpret/determine the ROs corresponding to the multiple PRACH resources with the repetition number of 4 as invalid ROs.

The UE may perform a RACH procedure based on the ROs configured/determined as the invalid ROs and FDMed (Frequency Division Multiplexed) ROs. Specifically, if there are FDMed RO(s) that do not overlap with other ROs in the same time instance (same time resource index) as the invalid RO, the UE may additionally select the FDMed ROs (or one of the FDMed ROs). The UE may reselect the FDMed RO into a RO group and perform the RACH procedure.

If there is no FDMed RO that does not overlap with other ROs in the same time instance as the RO configured/determined as the invalid RO, the UE may additionally select an RO of a next time instance. The UE may reselect the RO of the next time instance into a RO group and perform the RACH procedure.

### Method 2

A method of configuring/determining all overlapping ROs as invalid ROs may be considered. That is, a UE may expect that a base station pre-configures RACH resources so that ROs do not overlap entirely or partially on a time domain and/or a frequency domain. If ROs based on different RACH configurations overlap wholly or partially on the time domain and/or the frequency domain, the UE and the base station may configure/determine/process all the overlapping ROs as invalid ROs.

In this instance, the UE may expect that specific PRACH configuration indexes that may overlap with any RACH configuration (e.g., legacy RACH configuration) configured by the base station on the time domain and/or the frequency domain will not be used for other RACH configurations. In other words, the UE may expect that different RACH configurations configured/indicated by the base station do not overlap with each other on the time domain and/or the frequency domain. Specifically, the UE may expect that a PRACH configuration index and/or the number of FDMed ROs related to each RACH configuration will be configured so that different RACH configurations do not overlap with each other on the time domain and/or the frequency domain.

The above-described method 1/method 2 assume a single cell environment as a main target, but are not limited thereto. That is, the method 1/method 2 may be similarly applied in a dual connectivity (DC) environment. That is, even if multiple PRACH configurations with different repetition numbers are configured/indicated to a primary cell (PCell), one or multiple PRACH configurations with different repetition numbers may be additionally configured/indicated to a primary secondary cell (PSCell). As a result, although the PRACH configurations configured/indicated to the PCell and the PRACH configurations of the PSCell are FDMed via carriers, they may overlap on the time domain. In other words, ROs based on different PRACH configurations may overlap even in the DC environment.

In another aspect, the PRACH configurations of the PCell may collide with PUSCH/PUCCH/SRS, etc. of the PSCell. Or, PUSCH/PUCCH/SRS, etc. of the PCell may collide with the PRACH configurations of the PSCell.

In the above situation, if one or more ROs (or PUSCH/PUCCH/SRS) of the PCell overlap with one or more ROs (or PUSCH/PUCCH/SRS) of the PSCell on the time domain and/or the frequency domain, the UE and the base station may configure the RO (or PUSCH/PUCCH/SRS) of the PCell to be valid and may configure/determine the RO (or PUSCH/PUCCH/SRS) of the PSCell to be invalid. That is, the UE may not use the invalid RO and may drop the PUSCH/PUCCH/SRS determined to be invalid.

Alternatively, if the ROs of PScell overlap on the time domain and/or the frequency domain, the UE and the base station may determine the valid/invalid ROs using one of the above-mentioned methods (e.g., repetition number, priority, etc.).

The proposed methods can be configured/applied to other UL signals/channels such as MSG3 PUSCH, MSGA Preamble/PUSCH and/or PUSCH/PUCCH. Characteristically, the proposed UE/base station operations for PRACH repetition can also be configured/applied as UE/base station operations for other newly introduced features (e.g., repetition transmission features of Msg. 4 HARQ ACK PUCCH). For example, the feature for PUCCH repetition (e.g., pucch-Repetitions-r18) can be configured/applied instead of the feature for the proposed PRACH repetition, and the feature for PUCCH repetition can also be used for the proposed combination method and a method that the UE does not expect. Furthermore, when UE/base station operations for PRACH repetition and/or PUCCH repetition are supported simultaneously, the proposed methods can be configured/applied to all the two channels.

Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

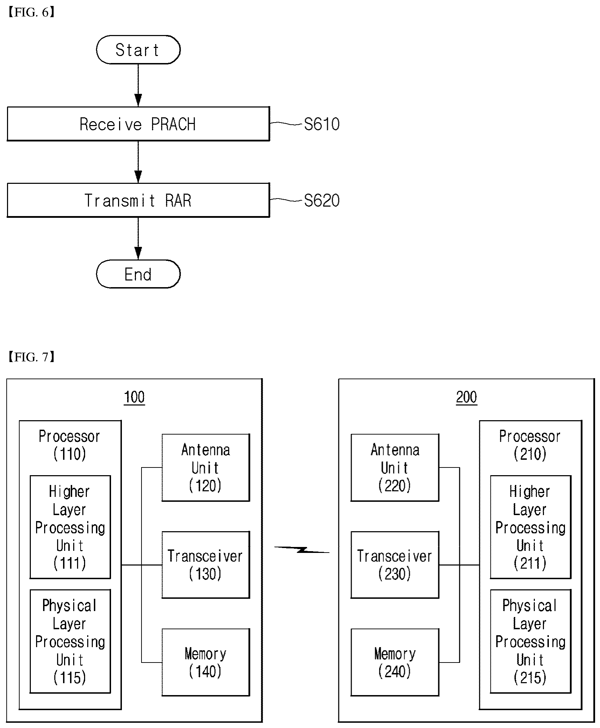

From an implementation perspective, operations of a base station/UE according to the above-described embodiments (e.g., operations based on at least one of the methods 1 and 2) can be processed by a device (e.g., processors 110 and 210 of FIG. 7) of FIG. 7 described below.

Further, the operations of the base station/UE according to the above-described embodiments (e.g., operations based on at least one of the methods 1 and 2) can be stored in a memory (e.g., memories 140 and 240 of FIG. 7) in the form of commands/programs (e.g., instructions, executable codes) for running at least one processor (e.g., processors 110 and 210 of FIG. 7).

Below, the above-described embodiments are described in detail from a UE and base station operation perspective with reference to FIGS. 5 and 6. Methods described below are merely distinguished for convenience of explanation. Thus, it is obvious that partial configuration of any method can be substituted or combined with partial configuration of another method.

FIG. 5 is a flowchart illustrating a method performed by a user equipment (UE) according to an embodiment of the present disclosure.

Referring to FIG. 5, a method performed by a user equipment (UE) according to an embodiment of the present disclosure includes a PRACH transmission step S510 and a RAR reception step S520.

In the step S510, the UE transmits a Physical Random Access CHannel (PRACH) to a base station.

The PRACH may be transmitted based on at least one PRACH occasion. For example, the number of the at least one PRACH occasion may be one. For example, the number of the at least one PRACH occasion may be based on a repetition number. The at least one PRACH occasion may be based on Tables 1 to 4 and FIG. 2.

The at least one PRACH occasion may be determined based on multiple PRACH occasions. The at least one PRACH occasion may be based on a valid PRACH occasion. In this case, an invalid PRACH occasion among the multiple PRACH occasions may be determined based on the following embodiments.

According to an embodiment, among the multiple PRACH occasions, a second PRACH occasion related to a second configuration that overlaps with a first PRACH occasion related to a first configuration may be determined to be invalid. The present embodiment may be based on the method 1 and/or the method 2.

For example, the multiple PRACH occasions may include PRACH occasions based on multiple configurations. The multiple configurations may be based on i) multiple RACH configurations or ii) multiple preamble configurations. The multiple RACH occasions may be based on *rach-ConfigCommon* of FIG. 4 and Table 7. The multiple preamble configurations (e.g., RACH partitionings) may be based on *FeatureCombinationPreambles* of FIG. 4 and Table 7.

For example, the second configuration may be a configuration determined based on at least one of i) a repetition number, ii) a priority, and/or iii) a serving cell among configurations related to overlapping PRACH occasions. The present embodiment may be based on the method 1. A method of determining the second configuration (specific RACH configuration and/or specific RACH partitioning) is described in detail below.

Based on the configurations being related to a same repetition number, the second configuration may be determined based on the priority.

Based on the configurations being related to a same priority, the second configuration may be determined based on the repetition number.

The second configuration may be determined based on the repetition number. For example, the repetition number related to the second configuration may be greater than a repetition number related to the first configuration. For example, the repetition number related to the second configuration may be less than the repetition number related to the first configuration.

The second configuration may be determined based on the priority. For example, the priority related to the second configuration may be lower than a priority related to the first configuration. As a specific example, a priority value related to the second configuration may be greater than a priority value related to the first configuration. Here, a lowest priority value (highest priority value) may mean a highest priority (lowest priority).

A configuration related to a primary secondary cell (PSCell) among the configurations may be determined as the second configuration. Specifically, the second configuration may be related to the PSCell. The first configuration may be related to a primary cell (PCell).

According to an embodiment, the at least one PRACH occasion may include a frequency division multiplexed (FDMed) PRACH occasion in the same time resource as the second PRACH occasion. The present embodiment may be based on the method 1. That is, the FDMed PRACH occasion may mean an FDMed RO in the method 1.

According to an embodiment, the first PRACH occasion and the second PRACH occasion may be determined as invalid PRACH occasions. The present embodiment may be based on the method 2. That is, all the overlapping PRACH occasions may be determined to be invalid.

In the step S520, the UE receives a random access response (RAR) from the base station.

The operations based on the steps S510 and S520 described above may be implemented by a device of FIG. 7. For example, a UE 200 may control one or more transceivers 230 and/or one or more memories 240 so as to perform the operations based on the steps S510 and S520.

Below, the above-described embodiments are described in detail from a perspective of base station operation.

Steps S610 and S620 described below correspond to the steps S510 and S520 described with reference to FIG. 5. Considering the above correspondence, redundant description is omitted. That is, the detailed description of the base station operation described below can be replaced with the description/embodiment of FIG. 5 corresponding to the base station operation. For example, the description/embodiment of the steps S510 and S520 of FIG. 5 may be additionally applied to the base station operation of the steps S610 and S620 described below.

FIG. 6 is a flowchart illustrating a method performed by a base station according to another embodiment of the present disclosure.

Referring to FIG. 6, a method performed by a base station according to another embodiment of the present disclosure includes a PRACH reception step S610 and a RAR transmission step S620.

In the step S610, the base station receives a Physical Random Access CHannel (PRACH) from a UE. The PRACH is received based on at least one PRACH occasion.

In the step S620, the base station transmits a random access response (RAR) to the UE.

The operations based on the steps S610 and S620 described above may be implemented by a device of FIG. 7. For example, a base station 100 may control one or more transceivers 130 and/or one or more memories 140 so as to perform the operations based on the steps S610 and S620.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system).

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE), the method comprising:
transmitting a Physical Random Access CHannel (PRACH); and
receiving a Random Access Response (RAR),
wherein the PRACH is transmitted based on at least one PRACH occasion,
wherein the at least one PRACH is determined based on a plurality of PRACH occasions,
wherein the at least one PRACH is based on a valid PRACH occasion, and
wherein, among the plurality of PRACH occasions, a second PRACH occasion related to a second configuration that overlaps with a first PRACH occasion related to a first configuration is determined to be invalid.

2. The method of claim 1, wherein the plurality of PRACH occasions include PRACH occasions based on multiple configurations.

3. The method of claim 2, wherein the multiple configurations are based on i) multiple RACH configurations or ii) multiple preamble configurations.

4. The method of claim 2, wherein the second configuration is a configuration determined based on at least one of i) a repetition number, ii) a priority, and/or iii) a serving cell among configurations related to overlapping PRACH occasions.

5. The method of claim 4, wherein based on the configurations being related to a same repetition number, the second configuration is determined based on the priority.

6. The method of claim 4, wherein based on the configurations being related to a same priority, the second configuration is determined based on the repetition number.

7. The method of claim 4, wherein the repetition number related to the second configuration is greater than a repetition number related to the first configuration.

8. The method of claim 4, wherein the priority related to the second configuration is lower than a priority related to the first configuration.

9. The method of claim 4, wherein the second configuration is related to a primary secondary cell (PSCell), and the first configuration is related to a primary cell (PCell).

10. The method of claim 1, wherein the at least one PRACH occasion includes a frequency division multiplexed (FDMed) PRACH occasion in the same time resource as the second PRACH occasion.

11. The method of claim 1, wherein the first PRACH occasion and the second PRACH occasion are determined as invalid PRACH occasions.

12. A user equipment (UE) comprising:
one or more transceivers;
one or more processors; and
one or more memories connected to the one or more processors and storing instructions,
wherein the instructions configure the one or more processors to perform all steps of a method according to any one of claims 1 to 11 based on being executed by the one or more processors.

13. A device comprising:
one or more memories; and
one or more processors operably connected to the one or more memories,
wherein the one or more memories store instructions that configure the one or more processors to perform all steps of a method according to any one of claims 1 to 11 based on being executed by the one or more processors.

14. One or more non-transitory computer readable mediums storing instructions,
wherein the instructions executable by one or more processors configure the one or more processors to perform all steps of a method according to any one of claims 1 to 11.

15. A method performed by a base station, the method comprising:
receiving a Physical Random Access CHannel (PRACH); and
transmitting a Random Access Response (RAR),
wherein the PRACH is received based on at least one PRACH occasion,
wherein the at least one PRACH is determined based on a plurality of PRACH occasions,
wherein the at least one PRACH is based on a valid PRACH occasion, and
wherein, among the plurality of PRACH occasions, a second PRACH occasion related to a second configuration that overlaps with a first PRACH occasion related to a first configuration is determined to be invalid.

16. A base station comprising:
one or more transceivers;
one or more processors; and
one or more memories connected to the one or more processors and storing instructions,
wherein the instructions configure the one or more processors to perform all steps of a method according to claim 15 based on being executed by the one or more processors.
